(19) Europäisches Patentamt / European Patent Office / Office européen des brevets

(11) **EP 4 293 619 A1**

(12) **EUROPEAN PATENT APPLICATION**
published in accordance with Art. 153(4) EPC

(43) Date of publication:
**20.12.2023 Bulletin 2023/51**

(21) Application number: **22778778.5**

(22) Date of filing: **25.03.2022**

(51) International Patent Classification (IPC):
**G06T 7/00** $^{(2017.01)}$

(52) Cooperative Patent Classification (CPC):
**G06T 3/40; G06T 3/60; G06T 7/00; G06T 7/70; G06T 7/80**

(86) International application number:
**PCT/CN2022/083024**

(87) International publication number:
**WO 2022/206595 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 CN 202110350834**

(71) Applicant: **Huawei Technologies Co., Ltd.**
**Shenzhen, Guangdong 518129 (CN)**

(72) Inventors:
• **ZHOU, Yao**
  **Shenzhen, Guangdong 518129 (CN)**
• **ZHANG, Menghan**
  **Shenzhen, Guangdong 518129 (CN)**
• **LI, Ming**
  **Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

(54) **IMAGE PROCESSING METHOD AND RELATED DEVICE**

(57) An image processing method is provided, including: obtaining M images acquired by M cameras arranged around a target region; and based on a region in which a target subject is located in the M images, determining one primary camera from the M cameras, and determining N secondary cameras from the M cameras based on a first primary camera, where images acquired by the one primary camera and the N secondary cameras are used to generate a free-viewpoint video, and a region in which the target subject is located in the free-viewpoint video is related to a region in which the target subject is in an image acquired at a primary camera position. The primary camera and the secondary cameras are selected based on the region in which the target subject is located in each of the images acquired by the M cameras. Therefore, an image providing a better display location for the region in which the target subject is located can be selected, and a camera that acquires the image is used as the primary camera. The free-viewpoint video is generated based on the images acquired by the primary camera and the secondary cameras, so that a video display effect of the target subject in the free-viewpoint video can be improved.

| | |
|---|---|
| Determine a target subject | 301 |
| Obtain M images, where the M images are images respectively acquired by M cameras for the target subject at a first moment, the M cameras are arranged around a target region, lenses of the M cameras are directed to the target region, and the target subject is within the target region; and determine a region in which the target subject is located in each of the M images | 302 |
| Determine one primary camera from the M cameras based on the region in which the target subject is located in each image, where a location of the primary camera is related to a location of the target subject in the target region | 303 |
| Determine N secondary cameras from the M cameras based on the primary camera | 304 |
| Generate a free-viewpoint video based on images acquired by the one primary camera and the N secondary cameras at a second moment, where a region in which the target subject is located in the free-viewpoint video is related to a region in which the target subject is in the image acquired by the primary camera at the second moment | 305 |

FIG. 3

EP 4 293 619 A1

**Description**

This application claims priority to Chinese Patent Application No. 202110350834.5, filed with the China National Intellectual Property Administration on March 31, 2021 and entitled "IMAGE PROCESSING METHOD AND RELATED DEVICE", which is incorporated herein by reference in its entirety.

**TECHNICAL FIELD**

This application relates to the field of image processing, and in particular, to an image processing method and a related device.

**BACKGROUND**

Free-viewpoint video is a technology for synchronously shooting, storing, processing, and generating a variable-viewpoint video through a multi-camera video acquisition system. The multi-camera system is deployed, according to a particular trajectory, in a region surrounding a stage or an arena. Multiple cameras trigger shutters based on a synchronization signal, for time-synchronous shooting. A plurality of video signals obtained through shooting are selected and trimmed by a director, and encoded into a segment of video, such as bullet time in the film *The Matrix.* In recent years, free-viewpoint video is mainly used in program shooting special effects, live sports events, and other scenarios. In addition to the frozen-in-time effect of bullet-time shooting, innovatively, a viewer may be allowed to freely select any 360-degree viewing angle at any time, which is different from a director's unified viewing angle available in conventional live broadcasting.

In an existing implementation, lens orientations of the multiple cameras are fixed, that is, focus only on a predefined spatial location, to generate a free-viewpoint video with this focal point as a fixed surround center. When a subject is at the surround center, the free-viewpoint video has a good video effect. However, when the subject deviates from the surround center, an off-axis rotation effect occurs, and the free-viewpoint video has a poor video effect.

**SUMMARY**

An embodiment of this application provides an image processing method, to improve a video display effect of a target subject in a free-viewpoint video.

According to a first aspect, this application provides an image processing method. The method includes the following:

A target subject is determined.

M images are obtained, where the M images are images respectively acquired by M cameras for the target subject at a first moment, the M cameras are arranged around a target region, lenses of the M cameras are directed to the target region, and the target subject is within the target region. A region in which the target subject is located in each of the M images is determined. A region in which the target subject is located in each of the M images is determined.

Shutters of the M cameras may be triggered through a synchronization signal to perform time-synchronized video acquisition, and M images are images respectively acquired by the M cameras at a moment (a first moment). It should be understood that due to a transmission delay of the trigger signal or different signal processing performance of the cameras, the M images may be images acquired by the M cameras within a time range with an acceptable error from the first moment.

The M cameras may be arranged, according to a particular trajectory, in a region surrounding the target region. The M cameras may be arranged according to circular, semicircular, elliptical, and other trajectories, as long as a field-of-view angle of the M cameras can cover a photographed region in the target region. The arrangement trajectory of the M cameras is not limited in this application. The M cameras may be located in a region outside the target region and at a specific distance (for example, 1 m or 2 m) from the target region. Alternatively, the M cameras may be located in an edge region of the target region, for example, arranged in an edge region on the stage.

The target region may be a photographed region such as a stage or a playing field.

The lenses of the M cameras being directed to the target region may be understood as main optical axes of the lenses of the M cameras being all directed to the target region. In other words, field-of-view angles of the M cameras all cover the target region or a local region in the target region.

The region in which the target subject is located in each of the images acquired by the M cameras may be determined by performing target subject detection on each of the M images acquired by the M cameras. The region corresponding to the target subject may be indicated by feature points of the target subject, that is, it is necessary to determine the feature points of the target subject in each of the images acquired by the plurality of cameras, where the feature points may indicate the region in which the target subject is located. Feature points may be stable feature points of a human body in a two-dimensional image, for example, may include at least one of the following feature points: skeletal points (shoulder skeletal points, hip skeletal points, and the like), head feature points, hand feature points, foot feature points, body clothing feature points or accessory textures, and the like.

One primary camera is determined from the M cameras based on the region in which the target subject is located in each image, where a location of the primary camera is related to a location of the target subject in the target region. N secondary cameras are determined from the M cameras based on the primary camera.

A free-viewpoint video is generated based on images acquired by the one primary camera and the N secondary cameras at a second moment, where a region in which the target subject is located in the free-viewpoint video is related to a region in which the target subject is in the image acquired by the primary camera at the second moment.

The images acquired by the one primary camera and the N secondary cameras at the second moment are arranged in time domain based on specific image arrangement rules to generate a free-viewpoint video. The rules may be automatically generated or specified by the user (such as the director).

To ensure that the region in which the target subject is located in the image for generating the free-viewpoint video does not have a problem such as off-axis or too small size, one primary camera may be selected from the M cameras based on the region in which the target subject is located in each of the images acquired by the M cameras. The target subject in the image acquired by the primary camera has a relatively high display quality, and then image transformation may be performed on images acquired by other secondary cameras based on the primary camera, to improve a display quality of the target subject in the images acquired by the other secondary cameras.

In this embodiment of this application, the primary camera and the secondary cameras are selected based on the region in which the target subject is located in each of the images acquired by the M cameras. Therefore, an image providing a better display location for the region in which the target subject is located can be selected, and a camera that acquires the image is used as the primary camera. The free-viewpoint video is generated based on the images acquired by the primary camera and the secondary cameras, so that a video effect of the target subject in the free-viewpoint video is improved.

In a possible implementation, at least one of the following relationships may be satisfied between the determined primary camera and the determined target subject:

Case 1: a distance between the primary camera and the target subject is less than a preset distance.

Because the target subject is a target that needs to be highlighted most in the free-viewpoint video, the target subject in the image acquired by the selected primary camera is required to have a relatively high image display quality. When the distance between the primary camera and the target subject is less than the preset distance, it can be ensured that the region in which the target subject is located in the image acquired by the primary camera accounts for a relatively large proportion of pixels in the image, so that the target subject in the image acquired by the primary camera has a relatively high image display quality. The preset distance may be related to a focal length of the camera and a size of the target region.

Case 2: the target subject is located at a center position of a region covered by a field-of-view angle of a lens of the primary camera.

Because the target subject is a target that needs to be highlighted most in the free-viewpoint video, the target subject in the image acquired by the selected primary camera is required to have a relatively high image display quality. When the location of the target subject in the target region is at a center position of a region to which the lens of the primary camera is directed (that is, the center position of the region covered by the field-of-view angle of the lens of the primary camera), it can be ensured that the region in which the target subject is located in the image acquired by the primary camera is in the central region of the image, so that the target subject in the image acquired by the primary camera has a relatively high image display quality.

Case 3: the target subject is completely imaged in the image acquired by the primary camera.

Because the target subject is a target that needs to be highlighted most in the free-viewpoint video, the target subject in the image acquired by the selected primary camera is required to have a relatively high image display quality. When there is no obstruction between the location of the primary camera and the location of the target subject in the target region, the target subject can be completely imaged in the image acquired by the primary camera, thereby ensuring that the region in which the target subject is located in the image acquired by the primary camera is not obscured by another obstruction, so that the target subject in the image acquired by the primary camera has a relatively high image display quality.

In a possible implementation, the determining one primary camera from the M cameras based on the region in which the target subject is located in each image includes:

determining a target image that satisfies a first preset condition from the M images based on the region in which the target subject is located in each image, and using a camera that acquires the target image as the primary camera, where the first preset condition includes at least one of the following:

Condition 1: an image in the M images and with the region in which the target subject is located being closest to a central axis of the image.

The central axis of the image can be understood as an axis of symmetry passing through the center point of the image, for example, may be a longitudinal axis on which the center point of the image is located. The central axis of the image can divide the image into two images with the same shape and size.

A central axis of the target subject can be understood as a longitudinal axis of the region in which the target subject is located in the image. For example, if the target subject is a person, the central axis of the target subject can be an axis of a direction of the person from the head to the feet in the image.

Because the target subject is a target that needs to be highlighted most in the free-viewpoint video, the region in which the target subject is located in the image acquired by the selected primary camera is required to be in a central region of the image, where the central region is a region of the image within a specific distance from the central axis of the image, for example, may be at a position with a 30% distance from the center.

Condition 2: an image in the M images and with the region in which the target subject is located accounting for a largest proportion of pixels in the image.

Because the target subject is a target that needs to be highlighted most in the free-viewpoint video, the region in which the target subject is located in the image acquired by the selected primary camera is required to cover a large area. To be specific, the region in which the target subject is located in the image acquired by the primary camera accounts for the largest proportion of pixels in the image among the M images.

Condition 3: an image in the M images and with the region in which the target subject is located having a largest pixel length in an image longitudinal axis direction of the image.

Because the target subject is a target that needs to be highlighted most in the free-viewpoint video, the pixel length, in the image longitudinal axis direction of the image, of the region in which the target subject is located in the image acquired by the selected primary camera is required to be greater than a preset value. For example, if the target subject is a person, the pixel length in the image longitudinal axis direction is a pixel length from the head to the feet of the person, and the region in which the target subject is located in the image acquired by the primary camera has the largest pixel length in the image longitudinal axis of the image among the M images.

It should be understood that, in an implementation, a camera image acquired by the determined primary camera may further be presented on a user terminal. If the user is not satisfied with this camera being selected as the primary camera, the primary camera may be reset through manual selection.

In a possible implementation, the using a camera that acquires the target image as the primary camera includes: obtaining a target camera position number corresponding to the camera that acquires the target image, and using the camera corresponding to the target camera position number as the primary camera.

In a possible implementation, the determining N secondary cameras from the M cameras based on the primary camera includes:

using N1 cameras in the clockwise direction from the primary camera and N2 cameras in the counterclockwise direction from the primary camera in the M cameras as secondary cameras, where the sum of N1 and N2 is N. A gap between camera positions of the N cameras and the primary camera is within a preset range. Because images acquired by the secondary cameras may also be used as the basis for generating the free-viewpoint video, it is necessary to ensure that the images acquired by the secondary cameras are of high quality. Because the target subject in the image acquired by the primary camera has a relatively high display quality, and the image acquired by the primary camera is used as a reference for the secondary cameras to perform image transformation, the N cameras with a gap between the camera positions thereof and the primary camera being within the preset range may be used as the secondary cameras.

In a possible implementation, the one primary camera and the N secondary cameras are cameras with consecutive camera numbers. When the free-viewpoint video is a frozen-moment surround video, to ensure smooth transition between the image frames in the generated free-viewpoint video, it is necessary to ensure that the camera positions of the cameras that acquire images are adjacent to each other, that is, the cameras with consecutive camera positions need to be selected from the plurality of cameras as the secondary cameras. To put it another way, each selected secondary camera should be directly or indirectly connected to the primary camera.

In a possible implementation, a distance between the region in which the target subject is located in images acquired by the N secondary cameras and the central axis of the image is less than a preset value. Because images acquired by the secondary cameras may also be used as the basis for generating the free-viewpoint video, it is necessary to ensure that the images acquired by the secondary cameras are of high quality. Specifically, a plurality of cameras with a distance between the region in which the target subject is located in the acquired image and the central axis of the image being within a preset range may be used as the secondary cameras.

In a possible implementation, the target subject is completely imaged in the images acquired by the N secondary cameras. Because images acquired by the secondary cameras may also be used as the basis for generating the free-viewpoint video, it is necessary to ensure that the images acquired by the secondary cameras are of high quality. Specifically, N cameras with the target subject being not obscured by another obstruction in the acquired images may be used as the secondary cameras.

In a possible implementation, N1 is a first preset value, and N2 is a second preset value.

In a possible implementation, N1 = N2, that is, a half of the N secondary cameras are located in the clockwise direction from the primary camera, and the other half are located in the counterclockwise direction from the primary camera.

In an implementation, the plurality of cameras except the primary camera may be used as the secondary cameras.

In an implementation, the primary camera may be used as a middle camera position, extending a specific angle to the left and right (for example, all cameras included by extending 30 degrees from the center point of an orientation of the current camera to the left and right are the secondary cameras). It should be understood that the user may select a degree of extension on the user terminal.

It should be understood that the conditions described above can be combined with each other, which is not limited herein.

In a possible implementation, the generating a free-viewpoint video based on images acquired by the one primary camera and the N secondary cameras at a second moment includes:

obtaining camera position numbers of the one primary camera and the N secondary cameras; and
performing, based on an order of the camera position numbers of the one primary camera and the N secondary cameras, time domain arrangement and subject alignment on N+1 images acquired by the one primary camera and the N secondary cameras at the second moment, to generate the free-viewpoint video.

In a possible implementation, the performing subject alignment on N+1 images acquired by the one primary camera and the N secondary cameras at the second moment includes at least one of the following:

Alignment method 1: scaling the N images acquired by the N secondary cameras at the second moment, by using a region in which the target subject is located in the image acquired by the one primary camera at the second moment as a reference. Specifically, the N images acquired by the N secondary cameras at the second moment may be scaled based on the region in which the target subject is located in the image acquired by the one primary camera at the second moment, to obtain N scaled images. A difference between pixel lengths, in the image longitudinal axis direction of the image, of the image acquired by the one primary camera and the region in which the target subject is located in the N scaled images is within a preset range.

Due to different distances between different camera positions and the target subject, the target object in images shot by cameras at the different camera positions at the same moment has different sizes. To ensure that two consecutive frames of the free-viewpoint video transition very smoothly, without a significant change in size, it is necessary to scale the images acquired by the cameras at the different camera positions, so that there is a relatively small difference between the size of the target subject in the scaled images and that of the target subject in the image acquired by the primary camera.

Alignment method 2: rotating the N images acquired by the N secondary cameras at the second moment, by using a region in which the target subject is located in the image acquired by the one primary camera at the second moment as a reference.

The N images acquired by the N secondary cameras at the second moment may be rotated based on the region in which the target subject is located in the image acquired by the one primary camera at the second moment, to obtain N rotated images. A difference of the target subject, in the direction from a top region to a bottom region, between the image acquired by the one primary camera and the N rotated images is within a preset range.

Because poses of cameras at different camera positions may be different and may not be on the same horizontal line, a direction of the target object in the image varies between images shot by the cameras at the different camera positions at the same moment. To ensure that two consecutive frames of the free-viewpoint video transition very smoothly, it is necessary to rotate the images acquired by the secondary cameras, so that there is a relatively small difference between the pose of the target subject in the rotated images and that of the target subject in the image acquired by the primary camera.

Alignment method 3: cropping each of the images acquired by the one primary camera and the N secondary cameras at the second moment, based on the region in which the target subject is located in each of the images acquired by the one primary camera and the N secondary cameras at the second moment. Specifically, each of the images acquired by the one primary camera and the N secondary cameras at the second moment may be cropped based on the region in which the target subject is located in each of the images acquired by the one primary camera and the N secondary cameras at the second moment, to obtain N+1 cropped images. The target subject in the N+1 cropped images is located in a central region, and the N+1 cropped images have the same size.

To ensure that the target person in each image frame of the free-viewpoint video is located in the central region, the image may be cropped based on the region in which the target subject is located in the image acquired by each of the primary camera and the plurality of secondary cameras, so that the target subject is located in the central region of the cropped image.

In a possible implementation, the determining a target subject includes:

identifying at least one subject in the target region;
sending information about each of the at least one subject to a terminal device; and
determining the target subject by receiving a selection indication sent by the terminal device for the target subject in the at least one subject.

In a possible implementation, the determining a target subject includes:
determining the target subject by identifying that the subject in the target region includes only the target subject.

In an embodiment of this application, when there are a plurality of subjects in the target region, the target subject may be selected based on interaction with a user.

Specifically, at least one subject in the target region may be identified, and at least one option is displayed, where each option is used to indicate one of the at least one subject. The user may determine, from the at least one subject, a subject to be displayed in the central region of the free-viewpoint video, and select a subject corresponding to the subject. Specifically, a selection of a target option may be triggered, and then, a selection indication for the target option in the at least one option may be received, where the target option is used to indicate the target subject in the at least one subject.

In one scenario, there is only one subject in the target region (that is, the target subject in this embodiment), and then a selection of the target subject may be enabled.

Specifically, it may be identified that the subject in the target region includes only the target subject, and then the selection of the target subject is enabled.

In a possible implementation, the target region includes a first target point and a second target point, and before the obtaining M images, the method further includes:

obtaining a location of the target subject in the target region; and
controlling, based on a distance between the location of the target subject and the first target point being less than that from the second target point, the lenses of the M cameras to change from being directed to the second target point to being directed to the first target point; and
the obtaining M images includes:
obtaining the M images acquired by the M cameras when the lenses are directed to the first target point.

Through the foregoing method, it is possible to obtain a surround video that retains a relatively large image size and automatically follows the selected subject as the central axis.

In a possible implementation, the determining a region in which the target subject is located in each of the M images includes:

obtaining a first location of the target subject in a physical space and intrinsic and extrinsic parameters of the M cameras; and
determining the region in which the target subject is located in each of the M images based on the first location and the intrinsic and extrinsic parameters of the M cameras.

In a possible implementation, the first moment is the same as the second moment; in other words, the images used for determining the primary camera and the N secondary cameras and the images used for generating the free-viewpoint video are acquired by the primary camera and the secondary cameras at the same moment; or
the first moment is different from the second moment; and before the generating a free-viewpoint video based on images acquired by the one primary camera and the N secondary cameras at a second moment, the method further includes:
obtaining the images acquired by the one primary camera and the N secondary cameras at the second moment.

According to a second aspect, this application provides a subject selection method, applied to a terminal device. The method includes the following:
A target interface including a rotation axis selection control is displayed, where the rotation axis selection control is configured to instruct to select a rotation axis.

In a free-viewpoint video, a shooting effect of changing a viewing angle with respect to an axis can be presented, where the axis may be referred to as a rotation axis. A user can select, through the rotation axis selection control in the target interface, a rotation axis that is used as the target rotation axis for a rotation center of a viewing angle during the generation of a free-viewpoint video, where the rotation axis may be a location point in the target region, for example, a center point of the target region or another point at a specific distance from the center point; or the rotation axis may be a subject, such as a person.

A selection operation for a target rotation axis is received.

A selection indication for the target rotation axis is sent to a server, where the target rotation axis is configured to instruct to generate a free-viewpoint video with the target rotation axis as a rotation center of a viewing angle.

In a possible implementation, the rotation axis selection control is configured to instruct to select the rotation axis from a location point in a target region.

In a possible implementation, the rotation axis selection control is configured to instruct to select the rotation axis from a plurality of subjects in a target region; the target rotation axis is used to indicate a target subject, and the target subject is further used to indicate to determine a primary camera, where a region in which the target subject is located in the free-viewpoint video is related to a region in which the target subject is in an image acquired by the primary camera.

According to a third aspect, this application provides an image processing apparatus. The apparatus includes:

a determining module, configured to determine a target subject;

an obtaining module, configured to obtain M images, where the M images are images respectively acquired by M cameras for the target subject at a first moment, the M cameras are arranged around a target region, lenses of the M cameras are directed to the target region, and the target subject is within the target region; and determine a region in which the target subject is located in each of the M images;

a camera determining module, configured to determine one primary camera from the M cameras based on the region in which the target subject is located in each image, where a location of the primary camera is related to a location of the target subject in the target region; and determine N secondary cameras from the M cameras based on the primary camera; and

a video generation module, configured to generate a free-viewpoint video based on images acquired by the one primary camera and the N secondary cameras at a second moment, where a region in which the target subject is located in the free-viewpoint video is related to a region in which the target subject is in the image acquired by the primary camera at the second moment.

In a possible implementation, the camera determining module is specifically configured to determine a target image that satisfies a first preset condition from the M images based on the region in which the target subject is located in each image, and use a camera that acquires the target image as the primary camera, where the first preset condition includes at least one of the following:

an image in the M images and with the region in which the target subject is located being closest to a central axis of the image; or

an image in the M images and with the region in which the target subject is located accounting for a largest proportion of pixels in the image; or

an image in the M images and with the region in which the target subject is located having a largest pixel length in an image longitudinal axis direction of the image.

In a possible implementation, the camera determining module is specifically configured to obtain a target camera position number corresponding to the camera that acquires the target image, and use the camera corresponding to the target camera position number as the primary camera.

In a possible implementation, a distance between the primary camera and the target subject is less than a preset distance; or

the target subject is located at a center position of a region covered by a field-of-view angle of a lens of the primary camera; or

the target subject is completely imaged in the image acquired by the primary camera.

In a possible implementation, the camera determining module is specifically configured to use N1 cameras in the clockwise direction from the primary camera and N2 cameras in the counterclockwise direction from the primary camera in the M cameras as secondary cameras, where the sum of N1 and N2 is N.

In a possible implementation, the one primary camera and the N secondary cameras are cameras with consecutive camera numbers; or

a distance between the region in which the target subject is located in images acquired by the N secondary cameras and the central axis of the image is less than a preset value; or

the target subject is completely imaged in the images acquired by the N secondary cameras, or

N1 is a first preset value, and N2 is a second preset value; or

$$N1 = N2.$$

In a possible implementation, the video generation module is specifically configured to obtain camera position numbers of the one primary camera and the N secondary cameras; and

perform, based on an order of the camera position numbers of the one primary camera and the N secondary cameras, time domain arrangement and subject alignment on N+1 images acquired by the one primary camera and the N secondary cameras at the second moment, to generate the free-viewpoint video.

In a possible implementation, the performing subject alignment on N+1 images acquired by the one primary camera and the N secondary cameras at the second moment includes at least one of the following:

scaling the N images acquired by the N secondary cameras at the second moment, by using a region in which the target subject is located in the image acquired by the one primary camera at the second moment as a reference; or rotating the N images acquired by the N secondary cameras at the second moment, by using a region in which the target subject is located in the image acquired by the one primary camera at the second moment as a reference; or cropping each of the images acquired by the one primary camera and the N secondary cameras at the second moment, based on the region in which the target subject is located in each of the images acquired by the one primary camera and the N secondary cameras at the second moment.

In a possible implementation, the determining module is configured to identify at least one subject in the target region;

send information about each of the at least one subject to a terminal device; and
determine the target subject by receiving a selection indication sent by the terminal device for the target subject in the at least one subject.

In a possible implementation, the determining module is configured to determine the target subject by identifying that the subject in the target region includes only the target subject.

In a possible implementation, the target region includes a first target point and a second target point, and the obtaining module is further configured to obtain a location of the target subject in the target region;

control, based on a distance between the location of the target subject and the first target point being less than that from the second target point, the lenses of the M cameras to change from being directed to the second target point to being directed to the first target point; and
obtain the M images acquired by the M cameras when the lenses are directed to the first target point.

In a possible implementation, the obtaining module is configured to obtain a first location of the target subject in a physical space and intrinsic and extrinsic parameters of the M cameras; and
determine the region in which the target subject is located in each of the M images based on the first location and the intrinsic and extrinsic parameters of the M cameras.

In a possible implementation, the first moment is the same as the second moment; or
the first moment is different from the second moment; and the obtaining module is further configured to: before the free-viewpoint video is generated based on the images acquired by the one primary camera and the N secondary cameras at the second moment, obtain the images acquired by the one primary camera and the N secondary cameras at the second moment.

According to a fourth aspect, this application provides a subject selection apparatus, applied to a terminal device. The apparatus includes:

a display module, configured to display a target interface including a rotation axis selection control, where the rotation axis selection control is configured to instruct to select a rotation axis;
a receiving module, configured to receive a selection operation for a target rotation axis; and
a sending module, configured to send a selection indication for the target rotation axis to a server, where the target rotation axis is configured to instruct to generate a free-viewpoint video with the target rotation axis as a rotation center of a viewing angle.

In a possible implementation, the rotation axis selection control is configured to instruct to select the rotation axis from a location point in a target region.

In a possible implementation, the rotation axis selection control is configured to instruct to select the rotation axis from a plurality of subjects in a target region; the target rotation axis is used to indicate a target subject, and the target subject is further used to indicate to determine a primary camera, where a region in which the target subject is located in the free-viewpoint video is related to a region in which the target subject is in an image acquired by the primary camera.

According to a fifth aspect, this application provides a server. The server includes a processor, a memory, and a bus, where the processor and the memory are connected through the bus; the memory is configured to store a computer program; and the processor is configured to control the memory and execute the program stored on the memory to implement the steps according to any one of the first aspect and the possible implementations of the first aspect.

According to a sixth aspect, this application provides a terminal device. The terminal device includes a processor, a memory, a display, and a bus, where

the processor, the display, and the memory are connected through the bus;
the memory is configured to store a computer program; and
the processor is configured to control the memory and execute the program stored on the memory, and further configured to control the display to implement the steps according to any one of the second aspect and the possible implementations of the second aspect.

According to a seventh aspect, this application provides a computer storage medium including computer instructions. When the computer instructions are executed on an electronic device or a server, the steps according to any one of the first aspect and the possible implementations of the first aspect and the steps according to any one of the second aspect and the possible implementations of the second aspect are performed.

According to an eighth aspect, this application provides a computer program product. When the computer program product is run on an electronic device or a server, the steps according to any one of the first aspect and the possible implementations of the first aspect and the steps according to any one of the second aspect and the possible implementations of the second aspect are performed.

According to a ninth aspect, this application provides a chip system. The chip system includes a processor, configured to support an execution device or a training device in implementing the functions in the foregoing aspects, for example, sending or processing data or information in the foregoing methods. In a possible design, the chip system further includes a memory. The memory is configured to store program instructions and data necessary for the execution device or the training device. The chip system may include a chip, or may include the chip and other discrete components.

An embodiment of this application provides an image processing method. The method includes: determining a target subject; obtaining M images, where the M images are images respectively acquired by M cameras for the target subject at a first moment, the M cameras are arranged around a target region, lenses of the M cameras are directed to the target region, and the target subject is within the target region; and determining a region in which the target subject is located in each of the M images; and determining a region in which the target subject is located in each of the M images; determining one primary camera from the M cameras based on the region in which the target subject is located in each image, where a location of the primary camera is related to a location of the target subject in the target region; determining N secondary cameras from the M cameras based on the primary camera; and where a location of the primary camera is related to a location of the target subject in the target region; generating a free-viewpoint video based on images acquired by the one primary camera and the N secondary cameras at a second moment, where a region in which the target subject is located in the free-viewpoint video is related to a region in which the target subject is in the image acquired by the primary camera. Through the foregoing method, the primary camera and the secondary cameras are selected based on the region in which the target subject is located in each of the images acquired by the M cameras. Therefore, an image providing a better display location for the region in which the target subject is located can be selected, and a camera that acquires the image is used as the primary camera. The free-viewpoint video is generated based on the images acquired by the primary camera and the secondary cameras, so that a video effect of the target subject in the free-viewpoint video is improved.

## BRIEF DESCRIPTION OF DRAWINGS

FIG. 1a is a schematic diagram of a camera arrangement according to an embodiment of this application;
FIG. 1b is a schematic diagram of a camera arrangement according to an embodiment of this application;
FIG. 1c is a schematic diagram of an architecture of a free-viewpoint video generation system in an embodiment of this application;
FIG. 1d is a schematic diagram of an architecture of a free-viewpoint video generation system in an embodiment of this application;

FIG. 1e is a schematic diagram of an architecture of a server in an embodiment of this application;

FIG. 1f is a schematic diagram of an architecture of a free-viewpoint video generation system in an embodiment of this application;

FIG. 2a illustrates a structure of a terminal device according to an embodiment of this application;

FIG. 2b is a block diagram of a software structure of a terminal device according to an embodiment of this application;

FIG. 3 illustrates a flow of an image processing method according to an embodiment of this application;

FIG. 4 illustrates a shooting scene in an embodiment of this application;

FIG. 5 illustrates an offline calibration flow in an embodiment of this application;

FIG. 6 illustrates determining of a physical location of a target subject in an embodiment of this application;

FIG. 7a illustrates a deviation of a location of a subject in an embodiment of this application;

FIG. 7b illustrates a deviation of a location of a subject in an embodiment of this application;

FIG. 7c illustrates an intermediate viewpoint in an embodiment of this application;

FIG. 8 illustrates image transformation in an embodiment of this application;

FIG. 9 illustrates a method for determining a region in which a target subject is located in an image in an embodiment of this application;

FIG. 10 illustrates virtual viewing angle transformation in an embodiment of this application;

FIG. 11 illustrates image cropping in an embodiment of this application;

FIG. 12 illustrates image cropping in an embodiment of this application;

FIG. 13 illustrates image cropping in an embodiment of this application;

FIG. 14 illustrates image cropping in an embodiment of this application;

FIG. 15 illustrates a flow of an image processing method according to an embodiment of this application;

FIG. 16 illustrates a focal point of a plurality of cameras according to an embodiment of this application;

FIG. 17 illustrates transformation of the focal point of the plurality of cameras according to an embodiment of this application;

FIG. 18 illustrates a flow of an image processing method according to an embodiment of this application;

FIG. 19 illustrates a flow of an image processing method according to an embodiment of this application;

FIG. 20a illustrates a flow of a subject selection method according to an embodiment of this application;

FIG. 20b illustrates an interface according to an embodiment of this application;

FIG. 21 illustrates an interface according to an embodiment of this application;

FIG. 22 illustrates an interface according to an embodiment of this application;

FIG. 23 illustrates an interface according to an embodiment of this application;

FIG. 24 illustrates a structure of an image processing apparatus according to an embodiment of this application;

FIG. 25 illustrates a structure of a subject selection apparatus according to an embodiment of this application; and

FIG. 26 illustrates a structure of a server according to an embodiment of this application.

## DESCRIPTION OF EMBODIMENTS

The embodiments of the present invention are described below with reference to the accompanying drawings in the embodiments of the present invention. The terms used in the implementations of the present invention are only used to explain the specific embodiments of the present invention, and are not intended to limit the present invention.

The embodiments of this application are described below with reference to the accompanying drawings. A person of ordinary skill in the art may be aware that with the development of technology and the emergence of new scenarios, the technical solutions provided in the embodiments of this application are equally applicable to similar technical problems.

The terms such as "first" and "second" in the specification, the claims, and the accompanying drawings of this application are used for distinguishing similar objects, but are not necessarily used for describing a particular sequence or order. It should be understood that the terms used in such a way can be interchanged as appropriate, and this is merely a description of distinguishing objects with the same attribute in the described embodiments of this application. In addition, the terms "include" and "have", and any variations thereof, are intended to cover a non-exclusive inclusion, so that a process, method, system, product, or device including a series of units is not necessarily limited to those units, but may include other units not explicitly listed or inherent to the process, method, product, or device.

The embodiments of this application may be applied to a free-viewpoint video generation system. The free-viewpoint video generation system may include a plurality of cameras arranged around a site to be photographed, a data transmission system for transmitting image frames acquired by the plurality of cameras to a cloud-side server, and a cloud-side data processing server for image processing. The image processing server may process the image frames acquired by the plurality of cameras into a free-viewpoint video. Next, they are described separately.

In the embodiments of this application, for the plurality of cameras arranged around the site to be photographed, the plurality of cameras may be arranged around a target region with respect to the center point of the site to be photographed (referred to as a target region in the subsequent embodiments). The plurality of cameras may be arranged in, but not limited to, a circle or a semicircle around the target region, where an angle by which adjacent cameras among the plurality of cameras are separated may be less than a preset value, for example, less than 10 degrees. The plurality of cameras may be arranged at intervals, that is, a distance between any two adjacent cameras among the plurality of cameras is the same. At a same moment, lens centers of the plurality of cameras are directed toward a same point in the target region (for example, a first target point and a second target point in the embodiments of this application).

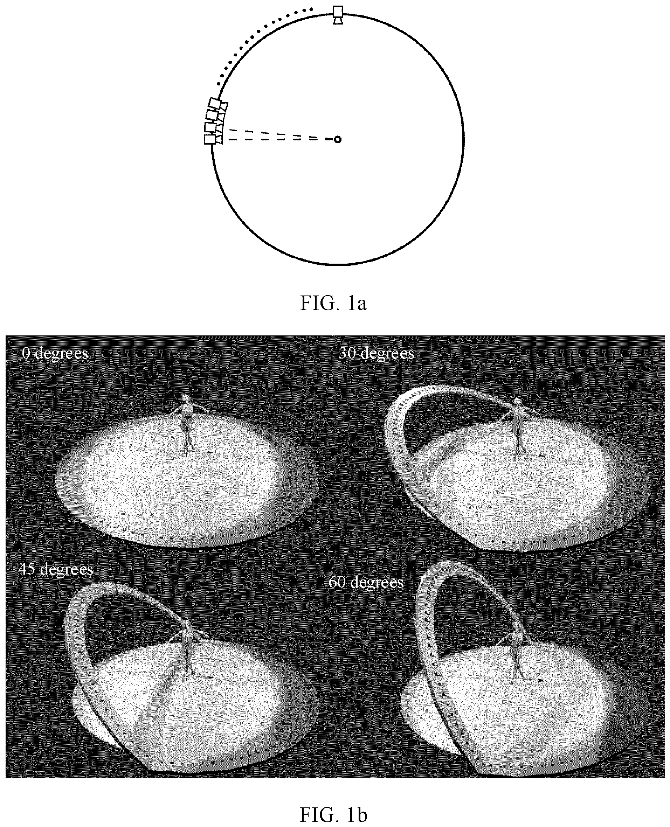

Referring to FIG. 1a, FIG. 1a illustrates a multi-camera arrangement in an embodiment of this application. As shown in FIG. 1a, a plurality of cameras may be arranged on the flat ground around a target region with respect to the center point of a site to be photographed (referred to as a target region in the subsequent embodiments). The plurality of cameras may be arranged in, but not limited to, a circle or a semicircle around the target region, where an angle by which adjacent cameras among the plurality of cameras are separated may be less than a preset value, for example, less than 10 degrees. The plurality of cameras may be arranged at intervals, that is, a distance between any two adjacent cameras among the plurality of cameras is the same. At a same moment, lens centers of the plurality of cameras are directed toward a same point in the target region.

Referring to FIG. 1b, FIG. 1b illustrates a multi-camera arrangement in an embodiment of this application. Different from FIG. 1a, some of the plurality of cameras may be disposed on a hydraulic rod, and the cameras disposed on the hydraulic rod can be lifted into the air with the lifting of the hydraulic rod. For example, in FIG. 1b, 120 cameras are evenly arranged at intervals of about 3 degrees, and 60 of the cameras are placed on a hydraulic rod. The hydraulic rod can lift up any angle, for example, 30 degrees, 45 degrees, and 60 degrees in FIG. 1b. During the lifting process of the hydraulic rod, lens centers of the cameras disposed on the hydraulic rod are directed toward a same point of the target region.

It should be understood that, the lens centers of the cameras being directed toward the same point of the target region may be understood in such a way that optical centers of the lenses of the plurality of cameras are directed toward the same point of the target region, that is, main optical axes of the lenses of the plurality of cameras may converge on the same point.

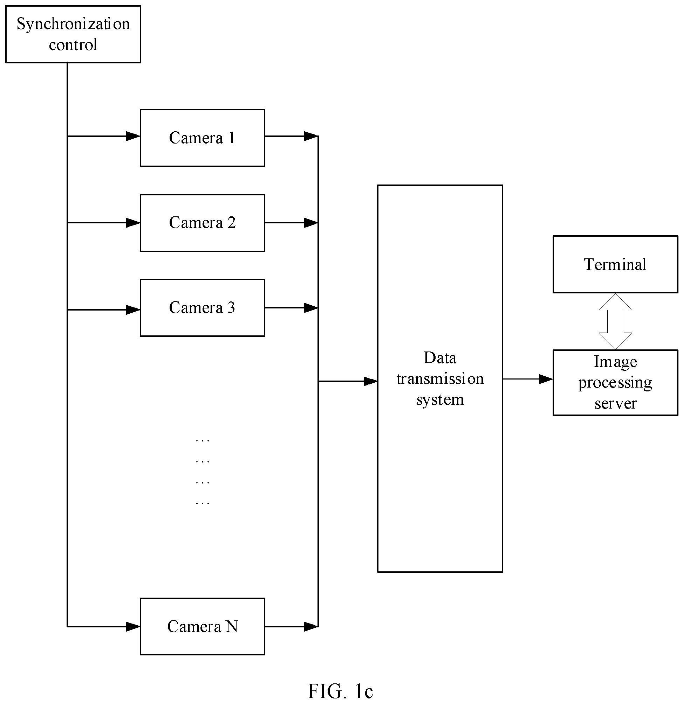

In an embodiment of this application, referring to FIG. 1c, image frames acquired by a plurality of cameras may be transferred to a cloud-side image processing server via a data transmission system, and the image processing server processes the image frames acquired by the plurality of cameras into a free-viewpoint video. Specifically, the image processing server may process the image frames acquired by the plurality of cameras into a free-viewpoint video based on an image processing method provided in an embodiment of this application.

As shown in FIG. 1c, the server may further be communicatively connected to a terminal. The terminal may participate in a process of generating a free-viewpoint video. A user may send an instruction to the image processing server using the terminal, and then the image processing server may generate a free-viewpoint video based on a rule indicated by the instruction.

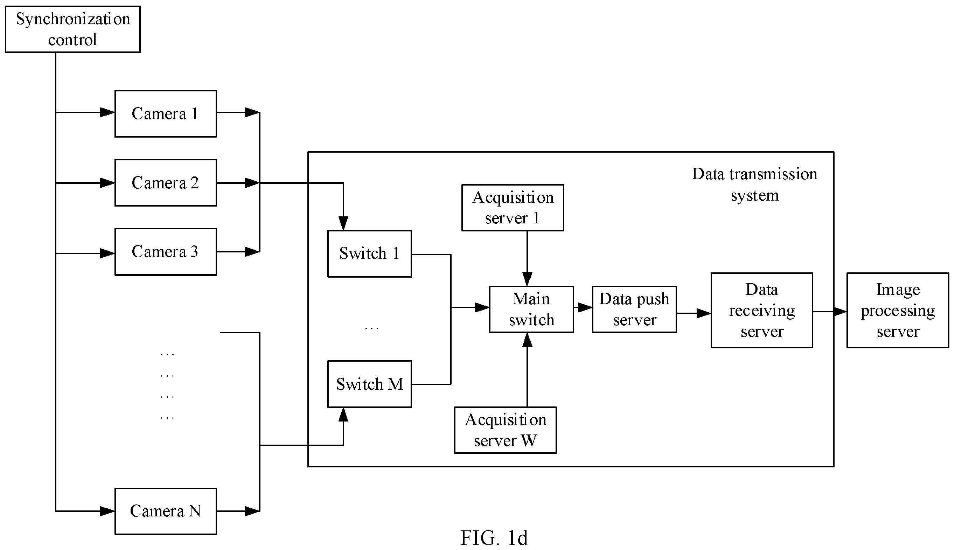

Referring to FIG. 1d, FIG. 1d illustrates an architecture of a free-viewpoint video generation system. As shown in FIG. 1d, a site to be photographed may include a plurality of cameras (for example, a camera 1, a camera 2, ..., and a camera N shown in FIG. 1d), a Layer-1 switch (for example, a switch 1, ..., and a switch M shown in FIG. 1d), an acquisition server (for example, an acquisition server 1, ..., and an acquisition server W shown in FIG. 1d), a main switch, and a data push server, and may include a data receiving server on the cloud side. Specifically, the plurality of cameras may be triggered by a synchronization control system to perform synchronous shooting. According to a bit rate, limited bandwidth, and the like of the cameras, M Layer-1 switches are provided to be connected to the cameras. Each Layer-1 switch is connected to N/M cameras and connected to the main switch. According to the bit rate, limited bandwidth, and the like of the cameras, W acquisition servers are configured and directly connected to the main switch, and are responsible for sending instructions to receive a video shot by the cameras. The data push server at the shooting site is responsible for sending a video signal received from the acquisition server to the data receiving server on the cloud side. The cloud-side data receiving server is responsible for receiving the video signal pushed by the data push server and transmitting the video signal to the image processing server. The server may extract image frames for the cameras and generate a free-viewpoint video.

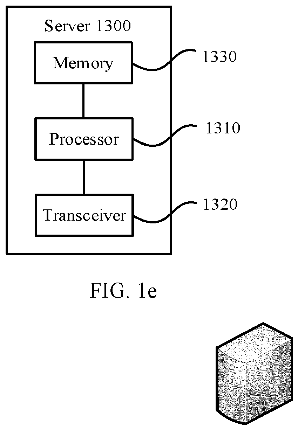

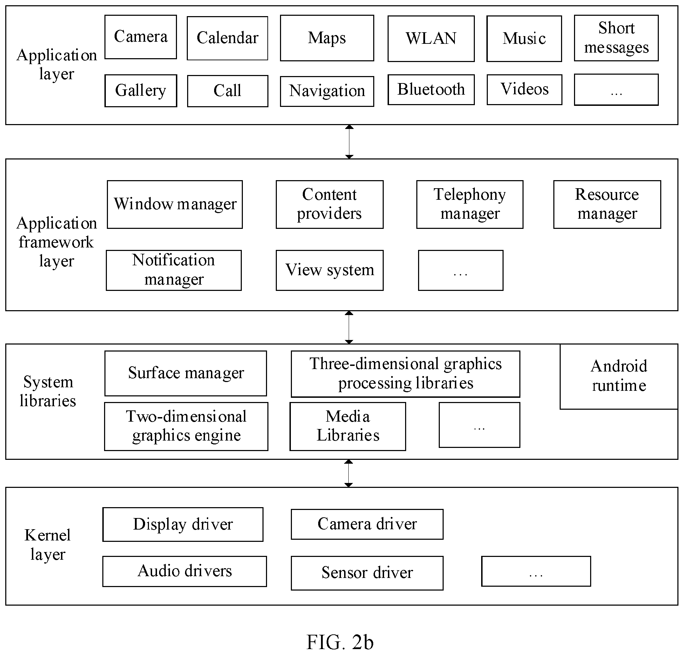

Next, the image processing server 1300 in this embodiment of this application is described. Referring to FIG. 1e, the server 1300 may include a processor 1310 and a transceiver 1320. The transceiver 1320 may be connected to the processor 1310, as shown in FIG. 2b. The transceiver 1320 may include a receiver and a transmitter, and may be configured to receive or send messages or data. The transceiver 1320 may be a network interface card. The server 1300 may further include an acceleration component (which may be referred to as an accelerator). When the acceleration component is a network acceleration component, the acceleration component may be a network interface card. The processor 1310 may be a control center of the server 1300, and connect various parts, such as the transceiver 1320, of the entire server 1300 using various interfaces and lines. In the present invention, the processor 1310 may be a central processing unit (Central Processing Unit, CPU). Optionally, the processor 1310 may include one or more processing units. Alternatively, the processor 1310 may be, for example, a digital signal processor, an application-specific integrated circuit, a field-programmable gate array, a GPU, or another programmable logic device. The server 1300 may further include a memory 1330. The memory 1330 may be configured to store software programs and modules. The processor 1310 executes various functional applications and data processing of the server 1300 by reading the software code and modules stored in the memory 1330. Specifically, the processor 1310 executes an image processing method provided in an embodiment of this application by reading the software code and modules stored in the memory 1330.

In this embodiment of this application, after generating the free-viewpoint video, the image processing server may transmit the free-viewpoint video to a terminal device on the client side. The terminal device can play the received free-viewpoint video. Alternatively, the terminal may participate in a process of generating a free-viewpoint video. A user may send an instruction to the image processing server using the terminal, and then the image processing server may generate a free-viewpoint video based on a rule indicated by the instruction.

As shown in FIG. 1f, the system may include a terminal device and a server. The terminal device may be a mobile terminal, a man-machine interaction device, or a vehicle-mounted visual sensing device, such as a mobile phone, a cleaning machine, an intelligent robot, a self-driving vehicle, an intelligent monitor, or an augmented reality (Augmented Reality, AR) wearable device.

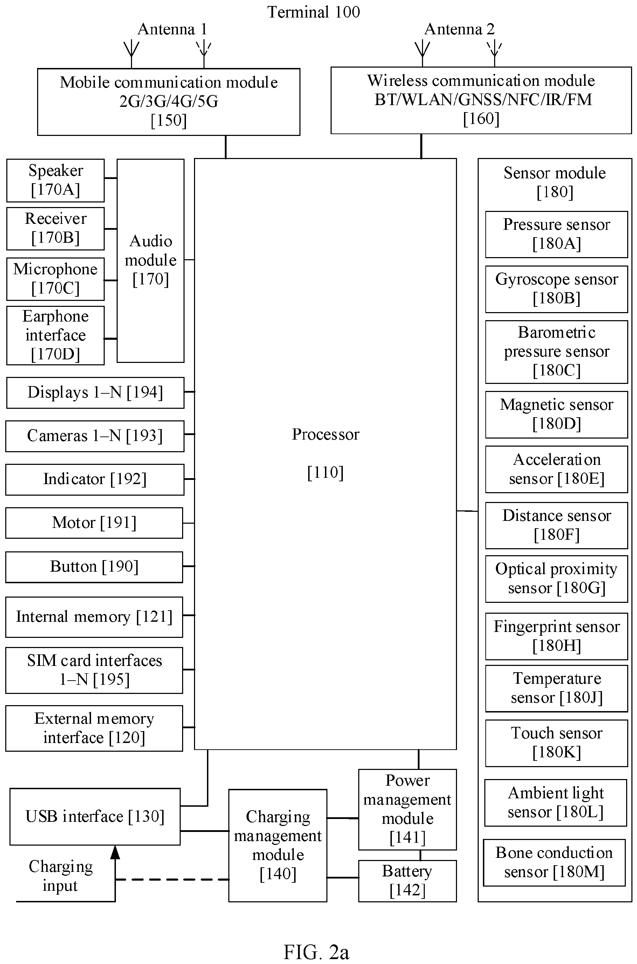

For ease of understanding, a structure of a terminal 100 provided in an embodiment of this application is described below as an example. Referring to FIG. 2a, FIG. 2a is a schematic diagram of a structure of a terminal device according to an embodiment of this application.

As shown in FIG. 2a, the terminal 100 may include a processor 110, an external memory interface 120, an internal memory 121, a universal serial bus (Universal Serial Bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, an earphone interface 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, or the like.

It can be understood that the structure illustrated in the embodiments of the present invention does not constitute a specific limitation on the terminal 100. In some other embodiments of this application, the terminal 100 may include more or fewer components than those shown in the figure, or may have some components combined or split, or may have a different arrangement of the components. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal according to an instruction opcode and a timing signal, and complete the control of fetching and executing instructions.

The processor 110 may further be provided with a memory for storing instructions and data. In some embodiments, the memory in the processor 110 is a cache memory. The memory may store instructions or data that have just been used or used repeatedly by the processor 110. If the processor 110 needs to use the instructions or data again, the processor may directly invoke the instructions or data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derail clock line, SCL). In some embodiments, the processor 110 may include multiple sets of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 and the touch sensor 180K communicate through the I2C bus interface to implement a touch function of the terminal 100.

The I2S interface may be configured for audio communication. In some embodiments, the processor 110 may include multiple sets of I2S buses. The processor 110 may be coupled to the audio module 170 through the I2S bus to implement communication between the processor 110 and the audio module 170. In some embodiments, the audio module 170 may transfer an audio signal to the wireless communication module 160 through the I2S interface to implement a function of answering calls through a Bluetooth headset.

The PCM interface may also be configured for audio communication, sampling, quantizing, and encoding an analog signal. In some embodiments, the audio module 170 and the wireless communication module 160 may be coupled through a PCM bus interface. In some embodiments, the audio module 170 may also transfer an audio signal to the wireless communication module 160 through the PCM interface to implement a function of answering calls through a Bluetooth headset. Both the I2S interface and the PCM interface may be configured for audio communication.

The UART interface is a universal serial data bus configured for asynchronous communication. The bus may be a bidirectional communication bus. The bus converts data to be transmitted between serial communication and parallel communication. In some embodiments, a UART interface is generally configured to connect the processor 110 and the wireless communication module 160. For example, the processor 110 communicates with a Bluetooth module in the wireless communication module 160 through the UART interface to implement a Bluetooth function. In some embodiments, the audio module 170 may transfer an audio signal to the wireless communication module 160 through the UART interface to implement a function of playing music through a Bluetooth headset.

The MIPI interface may be configured to connect the processor 110 and peripheral components such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface to implement a shooting function of the terminal 100. The processor 110 communicates with the display 194 through the DSI interface to implement a display function of the terminal 100.

The GPIO interface may be configured by software. The GPIO interface may be configured as a control signal or as a data signal. In some embodiments, the GPIO interface may be configured to connect the camera 193, the display 194, the wireless communication module 160, the audio module 170, the sensor module 180, and the like to the processor 110. The GPIO interface may also be configured as an I2C interface, an I2S interface, a UART interface, an MIPI interface, or the like.

The USB interface 130 is an interface conforming to the USB standard specification, and specifically, may be a Mini USB interface, a Micro USB interface, a USB Type C interface, or the like. The USB interface 130 may be configured to connect a charger to charge the terminal 100, and may also be used to transfer data between the terminal 100 and a peripheral device. The USB interface may also be configured to connect earphones and play audio through the earphones. The interface may also be configured to connect another electronic device, such as an AR device.

It can be understood that the interface connection relationship between the modules illustrated in the embodiments of the present invention is merely a schematic illustration, and does not constitute a limitation on the structure of the terminal 100. In some other embodiments of this application, the terminal 100 may alternatively use an interface connection manner different from that in the foregoing embodiment, or a combination of multiple interface connection manners.

The charging management module 140 is configured to receive a charging input from a charger.

The power management module 141 is configured to connect the battery 142, the charging management module 140, and the processor 110.

A wireless communication function of the terminal 100 may be implemented through the antenna 1, the antenna 2, the mobile communication module 150, the wireless communication module 160, a modem processor, a baseband processor, and the like.

The antenna 1 and the antenna 2 are configured to transmit and receive electromagnetic wave signals. Each antenna in the terminal 100 may be configured to cover one or more communication frequency bands. Different antennas can also be reused to improve antenna utilization. For example, the antenna 1 may be reused as a diversity antenna of a wireless local area network. In some other embodiments, the antenna may be used in combination with a tuning switch.

The mobile communication module 150 may provide a wireless communication solution including 2G/3G/4G/5G applied to the terminal 100. The mobile communication module 150 may include at least one filter, switch, power amplifier, low noise amplifier (low noise amplifier, LNA), and the like. The mobile communication module 150 may receive an electromagnetic wave via the antenna 1, perform filtering, amplification, and other processing on the received electromagnetic wave, and then transmit the electromagnetic wave to the modem processor for demodulation. The mobile communication module 150 may further amplify a signal modulated by the modem processor, which is converted into an electromagnetic wave that is then radiated out via the antenna 1. In some embodiments, at least some of the functional modules of the mobile communication module 150 may be set in the processor 110. In some embodiments, at least some of the functional modules of the mobile communication module 150 and at least some of the modules of the processor 110 may be set in a same component.

The modem processor may include a modulator and a demodulator. The modulator is configured to modulate a low-frequency baseband signal to be transmitted into a medium-high-frequency signal. The demodulator is configured to demodulate a received electromagnetic wave signal into a low-frequency baseband signal. Then the demodulator transfers the low-frequency baseband signal obtained through demodulation to the baseband processor for processing. The low-frequency baseband signal is transferred to the application processor after being processed by the baseband processor. The application processor outputs a sound signal through an audio device (not limited to the speaker 170A, the receiver 170B, and the like), or displays an image or a video through the display 194. In some embodiments, the modem processor may be an independent component. In some other embodiments, the modem processor may be independent of the processor 110, and may be set in the same component as the mobile communication module 150 or other functional modules.

The wireless communication module 160 may provide a wireless communication solution, applied to the terminal 100, including a wireless local area network (wireless local area networks, WLAN) (such as a wireless fidelity (wireless fidelity, Wi-Fi) network), bluetooth (bluetooth, BT), a global navigation satellite system (global navigation satellite system, GNSS), frequency modulation (frequency modulation, FM), near field communication (near field communication, NFC), infrared (infrared, IR), or the like. The wireless communication module 160 may be one or more components integrating at least one communication processing module. The wireless communication module 160 receives an electromagnetic wave via the antenna 2, performs frequency modulation and filtering on an electromagnetic wave signal, and sends the processed signal to the processor 110. The wireless communication module 160 may further receive, from the processor 110, a signal to be transmitted, and perform frequency modulation and amplification on the signal, which is converted into an electromagnetic wave that is then radiated out via the antenna 2.

In some embodiments, the antenna 1 of the terminal 100 is coupled to the mobile communication module 150, and the antenna 2 is coupled to the wireless communication module 160, so that the terminal 100 can communicate with the network and other devices through a wireless communication technology. The wireless communication technology may include a global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, IR, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite based augmentation systems, SBAS).

The terminal 100 implements a display function through the GPU, the display 194, the application processor, and the like. The GPU is a microprocessor for image processing and is connected to the display 194 and the application processor. The GPU is configured to perform mathematical and geometric computation for graphic rendering. The processor 110 may include one or more GPUs that execute program instructions to generate or change display information.

The display 194 is configured to display images, videos, or the like. The display 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the terminal 100 may include 1 or N displays 194, where N is a positive integer greater than 1.

Specifically, the display 194 may display a target interface in the embodiments.

The terminal 100 may implement a shooting function through the ISP, the camera 193, the video codec, the GPU, the display 194, the application processor, and the like. The ISP is configured to process data fed back by the camera 193. The camera 193 is configured to capture a static image or a video.

The video codec is configured to compress or decompress a digital video. The terminal 100 may support one or more video codecs. In this way, the terminal 100 can play or record videos in various encoding formats, for example, moving picture experts group (moving picture experts group, MPEG) 1, MPEG2, MPEG3, and MPEG4.

The external memory interface 120 may be configured to connect an external memory card, such as a Micro SD card, to expand a storage capability of the terminal 100. The external memory card communicates with the processor 110 through the external memory interface 120 to implement a data storage function, for example, storing music, video, and other files in the external memory card.

The internal memory 121 may be configured to store computer-executable program code, which includes instructions. The internal memory 121 may include a program storage area and a data storage area. The program storage area may store an operating system, an application program required by at least one function (for example, a sound playing function or an image playing function), and the like. The data storage area may store data (for example, audio data or a phone book) created with the use of the terminal 100. In addition, the internal memory 121 may include a high-speed random access memory, and may also include a non-volatile memory, for example, at least one magnetic disk storage device, flash memory device, or universal flash storage (universal flash storage, UFS). The processor 110 executes various functional applications and data processing of the terminal 100 by running the instructions stored in the internal memory 121 and/or the instructions stored in the memory provided in the processor.

The terminal 100 may implement an audio function, such as music playback or recording, through the audio module 170, the speaker 170A, the receiver 170B, the microphone 170C, the earphone interface 170D, the application processor, and the like.

The audio module 170 is configured to convert digital audio information into an analog audio signal output, and also configured to convert an analog audio input into a digital audio signal. The audio module 170 may be further configured to encode and decode the audio signal. In some embodiments, the audio module 170 may be set in the processor 110, or some functional modules of the audio module 170 may be set in the processor 110.

The speaker 170A, also referred to as a "loudspeaker", is configured to convert an audio electrical signal into a sound signal. The terminal 100 may allow for listening to music or answering hands-free calls with the speaker 170A. The receiver 170B, also referred to as an "earpiece", is configured to convert an audio electrical signal into a sound signal. The microphone 170C, also referred to as a "mic" or "mike", is configured to convert a sound signal into an electrical signal. The earphone interface 170D is configured to connect wired earphones.

The pressure sensor 180A is configured to sense a pressure signal, and convert the pressure signal into an electrical signal.

The gyroscope sensor 180B may be configured to determine a motion gesture of the terminal 100.

The barometric pressure sensor 180C is configured to measure barometric pressure.

The magnetic sensor 180D includes a Hall sensor.

The acceleration sensor 180E may measure accelerations of the terminal 100 in various directions (generally three axes).

The distance sensor 180F is configured to measure a distance.

The optical proximity sensor 180G may include, for example, a light-emitting diode (LED) and a light detector, such as a photodiode.

The ambient light sensor 180L is configured to sense luminance of ambient light.

The fingerprint sensor 180H is configured to collect a fingerprint.

The temperature sensor 180J is configured to measure temperature.

The touch sensor 180K is also referred to as a "touch component". The touch sensor 180K may be provided in the display 194, and the touch sensor 180K and the display 194 form a touchscreen, which is also referred to as a "touchscreen". The touch sensor 180K is configured to detect a touch operation on or near the touch sensor. The touch sensor may transfer the detected touch operation to the application processor to determine a type of a touch event. The display 194 may provide a visual output related to the touch operation. In some other embodiments, the touch sensor 180K may alternatively be disposed on a surface of the terminal 100 at a location different from that of the display 194.

The bone conduction sensor 180M may obtain a vibration signal.

The button 190 includes a power button, a volume button, or the like. The button 190 may be a mechanical button, or may be a touch button. The terminal 100 may receive a button input, and generate a button signal input related to user setting and function control of the terminal 100.

The motor 191 may generate a vibration alert.

The indicator 192 may be an indicator light, which may be configured to indicate a charging status and battery level changes, and may also be configured to indicate messages, missed calls, notifications, and the like.

The SIM card interface 195 is configured to connect a SIM card.

A software system of the terminal 100 may use a layered architecture, an event-driven architecture, a microkernel architecture, a microservice architecture, or a cloud architecture. In an embodiment of the present invention, a software structure of the terminal 100 is described by taking an Android system with a layered architecture as an example.

FIG. 2b is a block diagram of a software structure of the terminal 100 according to an embodiment of the present disclosure.

In the layered architecture, software is divided into several layers, and each layer has a clear role and responsibility. The layers communicate with each other through a software interface. In some embodiments, the Android system is divided into four layers, which are, from top to bottom, an application layer, an application framework layer, Android runtime (Android runtime) and system libraries, and a kernel layer.

The application layer may include a series of application packages.

As shown in FIG. 2b, the application packages may include applications such as camera, gallery, calendar, call, maps, navigation, WLAN, Bluetooth, music, videos, and short messages.

The application framework layer provides an application programming interface (application programming interface, API) and programming framework for applications at the application layer. The application framework layer includes some predefined functions.

As shown in FIG. 2b, the application framework layer may include a window manager, content providers, a view system, a telephony manager, a resource manager, a notification manager, and the like.

The window manager is configured to manage window programs. The window manager can obtain a size of a display, determine whether there is a status bar, lock the screen, capture the screen, and the like.

The content providers are configured to store and retrieve data and make the data accessible to applications. The data may include videos, images, audio, calls made and received, browsing history and bookmarks, phonebook, and the like.

The view system includes visual controls, such as a control for displaying text, a control for displaying pictures, and the like. The view system may be configured to build an application. A display interface may be composed of one or more views. For example, a display interface including a short message notification icon may include a view for displaying text and a view for displaying pictures.

The telephony manager is configured to provide a communication function of the terminal 100, for example, management of a call status (including calls connected, hung up, and the like).

The resource manager provides various resources for applications, such as localized strings, icons, pictures, layout files, and video files.

The notification manager enables an application to display notification information in the status bar, and can be used to communicate notification-type messages, which may automatically disappear after a short stay without user interaction. For example, the notification manager is configured to give notifications of download completion, messages, and the like. The notification manager may also be a notification that appears in the top status bar of the system in the form of a chart or scroll bar text, for example, a notification of an application running in the background, or a notification that appears on the screen in the form of a dialog window. For example, text information is displayed in the status bar, an alert tone is issued, the electronic device vibrates, an indicator light blinks, and so on.

The Android runtime includes core libraries and virtual machines. The Android runtime is responsible for the scheduling and management of the Android system.

The core libraries include two parts, namely, functional functions that need to be invoked by the Java language, and core libraries of Android.

The application layer and the application framework layer run in the virtual machines. The virtual machines execute Java files of the application layer and the application framework layer as binary files. The virtual machines are configured to perform functions such as object life cycle management, stack management, thread management, security and exception management, and garbage collection.

The system libraries may include a plurality of functional modules, such as a surface manager (surface manager), media libraries (Media Libraries), three-dimensional graphics processing libraries (for example, OpenGL ES), and 2D graphics engine (for example, SGL).

The surface manager is configured to manage a display subsystem and provides the merging of 2D and 3D layers for a plurality of applications.

The media libraries support playback and recording of various common audio and video formats, as well as still image files, and the like. The media libraries can support a variety of audio and video encoding formats, such as MPEG4, H.264, MP3, AAC, AMR, JPG, and PNG.

The three-dimensional graphics processing libraries are configured to implement three-dimensional graphics drawing, image rendering, synthesis, and layer processing, and the like.

The 2D graphics engine is a drawing engine for 2D drawing.

The kernel layer is a layer between hardware and software. The kernel layer includes at least a display driver, a camera driver, an audio driver, and a sensor driver.

As an example, a workflow of the software and hardware of the terminal 100 is described below with reference to a video playback scenario.

When the touch sensor 180K receives a touch operation, a corresponding hardware interrupt is sent to the kernel layer. The kernel layer processes the touch operation into an original input event (including touch coordinates, a timestamp of the touch operation, and other information). The original input event is stored at the kernel level. The application framework layer obtains the original input event from the kernel layer, and identifies a control corresponding to the input event. For example, the touch operation is a touch and click operation, and the control corresponding to the click operation is a control of a video playback related application icon. The video playback application invokes an interface of the application framework layer to start the video playback application, and then invokes the kernel layer to play a video in a video playback interface of the video playback application. For example, a free-viewpoint video may be played.

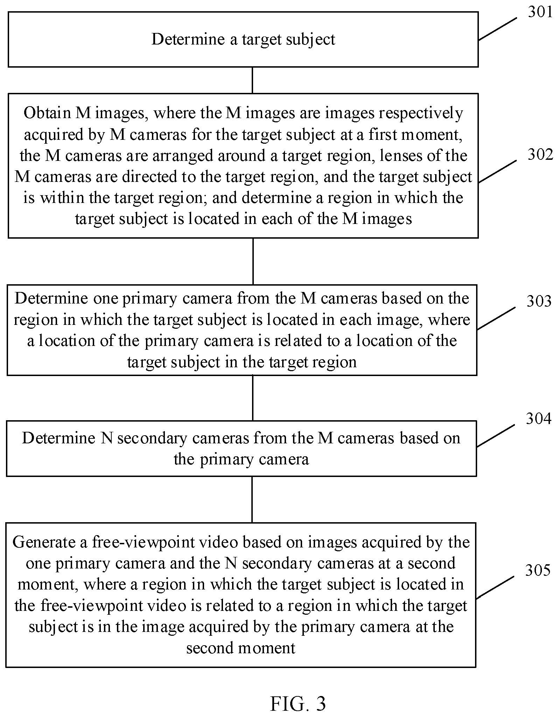

Referring to FIG. 3, FIG. 3 illustrates a flow of an image processing method according to an embodiment of this application. As shown in FIG. 3, the image processing method provided in this embodiment of this application includes the following steps.

301: Determine a target subject.

In a scenario of free-viewpoint video generation, M cameras are arranged around a target region, lenses of the M cameras are directed to the target region, and the target subject is within the target region.

Shutters of the M cameras may be triggered through a synchronization signal to perform time-synchronized video acquisition, and M images are images respectively acquired by the M cameras at a moment (a first moment). It should be understood that due to a transmission delay of the trigger signal or different signal processing performance of the cameras, the M images may be images acquired by the M cameras within a time range with an acceptable error from the first moment.

The M cameras may be arranged, according to a particular trajectory, in a region surrounding the target region. The M cameras may be arranged according to circular, semicircular, elliptical, and other trajectories, as long as a field-of-view angle of the M cameras can cover a photographed region in the target region. The arrangement trajectory of the M cameras is not limited in this application. The M cameras may be located in a region outside the target region and at a specific distance (for example, 1 m or 2 m) from the target region. Alternatively, the M cameras may be located in an edge region of the target region, for example, arranged in an edge region on the stage.

The target region may be a photographed region such as a stage or a playing field.

In one scenario, there may be a plurality of subjects in the target region, and then a selection of the target subject needs to be enabled, that is, a selection of a subject to be displayed in a central region of a free-viewpoint video needs to be enabled.

In an embodiment of this application, when there are a plurality of subjects in the target region, the target subject may be selected based on interaction with a user.

Specifically, at least one subject in the target region may be identified, and at least one option is displayed, where each option is used to indicate one of the at least one subject. The user may determine, from the at least one subject, a subject to be displayed in the central region of the free-viewpoint video, and select a subject corresponding to the subject. Specifically, a selection of a target option may be triggered, and then, a selection indication for the target option in the at least one option may be received, where the target option is used to indicate the target subject in the at least one subject.

In one scenario, there is only one subject in the target region (that is, the target subject in this embodiment), and then a selection of the target subject may be enabled.

Specifically, it may be identified that the subject in the target region includes only the target subject, and then the selection of the target subject is enabled.

It should be understood that the target subject is the main display object in the free-viewpoint video. For example, the target subject is a dancer on the stage or an athlete on the playing field. The target subject is, for example, a person in the following description. Alternatively, the target subject may be non-human, such as an animal, a plant, or an inanimate object, which is not limited in the embodiments of this application.

302: Obtain M images, where the M images are images respectively acquired by M cameras for the target subject at a first moment, the M cameras are arranged around a target region, lenses of the M cameras are directed to the target region, and the target subject is within the target region; and determine a region in which the target subject is located in each of the M images; and determine a region in which the target subject is located in each of the M images.

The M images that are respectively acquired by the M cameras at the same moment (the first moment) may be obtained, and the free-viewpoint video may be generated based on the M images.

When the target subject is near a point to which the lenses of the M cameras are directed, the target subject is located in a central region of an image acquired by each of the cameras, so that a synthesized free-viewpoint video can have a better video effect. However, when the target subject moves to a location deviating from the point to which the centers of the lenses of the plurality of cameras are directed, the person may be located in an edge region of an image acquired by some of the cameras. This causes an off-axis effect (the off-axis herein refers to a deviation from a central axis of the image), and a free-viewpoint video synthesized with these images has a poor video effect.

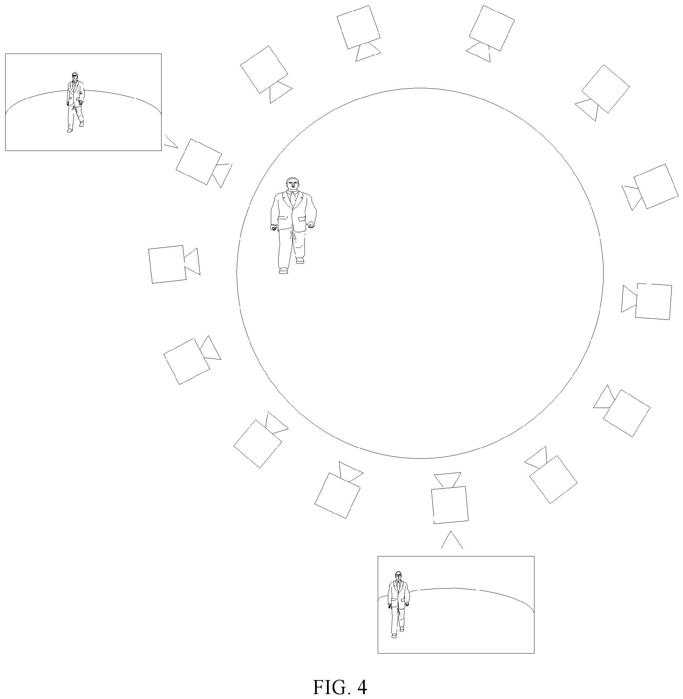

Reference may be made to FIG. 4. In FIG. 4, a person is near a location deviating from a point to which the centers of lenses of a plurality of cameras are directed. In an image acquired by an upper left camera in FIG. 4, the person is located in a central region, while in an image acquired by a lower camera in FIG. 4, the person is located in a left edge region. In a free-viewpoint video generated based on this case, if the viewpoint is gradually switched from the upper left camera in FIG. 4 to the lower camera in FIG. 4, the person in the free-viewpoint video gradually deviates from the central region to the left edge region. It can be learned that the free-viewpoint video generated in this case has a poor video effect.

The image processing method provided in this embodiment of this application can allow the target subject to be located in the central region in the generated free-viewpoint video even when the target subject is at the location deviating from the point to which the centers of the lenses of the plurality of cameras are directed.

To generate the free-viewpoint video, it is necessary to obtain a sequence of image frames acquired by the plurality of cameras, and based on an arrangement rule of image frames of the free-viewpoint video, select image frames that constitute the free-viewpoint video from the sequence of image frames acquired by the plurality of cameras, and select an arrangement order of the selected image frames. The image frames and the arrangement order of the image frames that are to be selected may be determined by a director or other personnel.

The free-viewpoint video may be a segment of consistent video images generated based on the image frames acquired by the plurality of cameras, and a viewer's perception is rotation of a scene around the subject.

In an implementation, the free-viewpoint video may be a video having a frozen-in-time surround effect, where the free-viewpoint video may be image frames acquired by the plurality of cameras at the same moment, and an arrangement order of the image frames may be an order of camera positions in which a plurality of images acquired by the plurality of cameras at the same moment are arranged.

In an implementation, the free-viewpoint video may be a video that is continuous in time and has a surround effect, where the free-viewpoint video may be image frames acquired by the plurality of cameras at different moments, and an arrangement order of the image frames may be an arrangement order of camera positions and a time order of image acquisition in which images acquired by a same camera or different cameras at different moments are arranged.

In this embodiment of this application, the images acquired by the M cameras may be obtained, where the images acquired by the M cameras are original images acquired by the cameras. Next, the concept of the original image is described.

A terminal may open the shutter when taking pictures, and then light may be transmitted to an image sensor of the camera through the lens. The image sensor of the camera may convert an optical signal into an electrical signal, and transmit the electrical signal to an image signal processor (image signal processor, ISP), a digital signal processor (digital signal processor, DSP), and the like for processing, so that the electrical signal can be converted into an image, which may be referred to as an original image acquired by the camera. The images acquired by the plurality of cameras described in this embodiment of this application may be the original images. It should be understood that the images acquired by the plurality of cameras may also be images obtained by cropping the images processed by the ISP and the DSP. The cropping may be performed to fit a size of a display of the terminal.

After the target subject is determined, a region in which the target subject is located in each of the images acquired by the plurality of cameras may be determined.

In this embodiment of this application, the region in which the target subject is located in each of the images acquired by the M cameras may be determined by performing target subject detection on each of the M images acquired by the M cameras. The region corresponding to the target subject may be indicated by feature points of the target subject, that is, it is necessary to determine the feature points of the target subject in each of the images acquired by the plurality of cameras, where the feature points may indicate the region in which the target subject is located. Feature points may be stable feature points of a human body in a two-dimensional image, for example, may include at least one of the following feature points: skeletal points (shoulder skeletal points, hip skeletal points, and the like), head feature points, hand feature points, foot feature points, body clothing feature points or accessory textures, and the like.

In this embodiment of this application, the region in which the target subject is located in each of the images acquired by the plurality of cameras may be determined based on intrinsic and extrinsic parameters of the M cameras.

In a possible implementation, a first location of the target subject in a physical space and the intrinsic and extrinsic parameters of the plurality of cameras may be obtained, and the region in which the target subject is located in each of the images acquired by the plurality of cameras is determined based on the first location and the intrinsic and extrinsic parameters of the plurality of cameras.

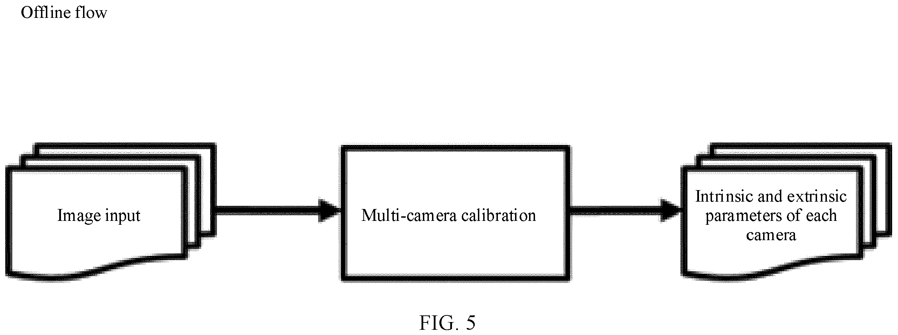

The intrinsic and extrinsic parameters may be calibration result RT matrices of the cameras that are generated through online or offline calibration (for an offline calibration process, refer to FIG. 5), and may include, but are not limited to, intrinsic parameters of the cameras and extrinsic RT matrices for conversion between two-dimensional images and three-dimensional world points of the cameras.

The intrinsic and extrinsic parameters of the cameras may be obtained through offline or online calibration. Specifically, referring to FIG. 5, a camera at each camera position may acquire a single frame of image containing a calibration marker, and calculate a position relationship between the image and a 3D object by inputting the image of the calibration marker that is acquired by each camera and an actual coordinate position of the calibration marker and identifying the calibration marker. Then the image at each camera position and actual three-dimensional coordinate points of all two-dimensional codes of a calibration target according to corresponding numbers may be input through the calibration target to calibrate each camera and obtain intrinsic and extrinsic parameters of each camera.

In an implementation, images (including a first image) acquired by the plurality of cameras at the same moment may be obtained, and coordinates of two-dimensional feature points of the target subject in the plurality of images may be determined. Then first locations of the feature points of the target subject in the physical space may be calculated through triangulation of multi-camera coordinates, and a three-dimensional coordinate centroid of the target subject may be obtained by averaging the first locations.

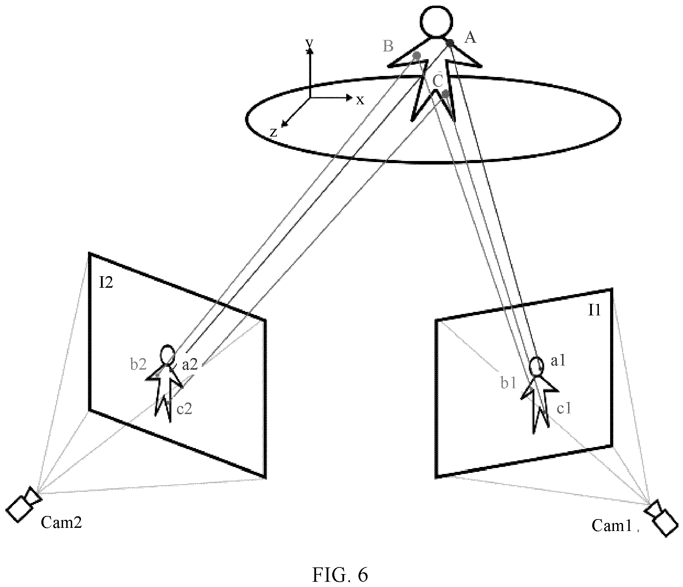

Specifically, a spatial coordinate system for a site may be defined first, and a spatial position relationship between each of the plurality of cameras may be obtained through offline calibration. Subject segmentation is performed for an image from each camera. Referring to FIG. 6, in an image obtained through the segmentation, stable feature points of the target subject in a two-dimensional image are extracted for feature point matching, such as a1-a2, b1-b2, and c1-c2, and a known camera pose and the matching two-dimensional feature points are used for triangulation to obtain three-dimensional world point positions of A, B, and C. Then a center average of the three-dimensional world point positions may be calculated as a three-dimensional world point center CenterW = (X, Y, Z) of a rotation axis, and a specific height in the same direction as a (0, 0, 1) vector perpendicular to the ground of the site is added as CenterW' = (X, Y, Z+1000). Moreover, (CenterW, CenterW') is used as a main axis of the target subject in the image, and the main axis may indicate the first location of the target subject in the physical space.

Based on the first location and the intrinsic and extrinsic parameters of each camera, a corresponding location, at each camera position, of the first location of the target subject in the physical space is separately calculated, and then the region in which the target subject is located in each of the images acquired by the plurality of cameras is obtained.

Next, a specific illustration of determining, based on the first location and the intrinsic and extrinsic parameters of the plurality of cameras, the region in which the target subject is located in each of the images acquired by the plurality of cameras is provided.

The first location may be the three-dimensional world points AB of the central axis that are obtained through triangulation. The intrinsic and extrinsic parameters may be the calibration result RT matrix of each camera (the calibration result is an original calibration file, and the original calibration file includes intrinsic parameters of each camera and extrinsic RT matrices for conversion between a two-dimensional image and a three-dimensional world point of each camera). A corresponding location of the three-dimensional central axis AB at each camera position is separately calculated by invoking the original calibration file and using the following formulas (where (Xw, Yw, Zw) are world coordinates, fx, fy, cx, and cy are intrinsic parameters of the camera, and u and v are two-dimensional image coordinates corresponding to the world coordinates), to obtain two-dimensional coordinate points (A1, B1) and (A2, B2) of the two points in the images acquired by the cameras V1 and V2.

$$R = \begin{bmatrix} r_{11} & r_{12} & r_{13} \\ r_{21} & r_{22} & r_{23} \\ r_{31} & r_{32} & r_{33} \end{bmatrix} \qquad T = \begin{bmatrix} t_1 \\ t_2 \\ t_3 \end{bmatrix} ,$$

$$s \begin{bmatrix} u \\ v \\ 1 \end{bmatrix} = \begin{bmatrix} f_x & 0 & c_x \\ 0 & f_y & c_y \\ 0 & 0 & 1 \end{bmatrix} \begin{bmatrix} r_{11} & r_{12} & r_{13} & t_1 \\ r_{21} & r_{22} & r_{23} & t_2 \\ r_{31} & r_{32} & r_{33} & t_3 \end{bmatrix} \begin{bmatrix} X_w \\ Y_w \\ Z_w \\ 1 \end{bmatrix} ;$$

The two-dimensional coordinate points (A1, B1) and (A2, B2) obtained above respectively indicate regions in which the target subject is located in the images acquired by the cameras V1 and V2.

303: Determine one primary camera from the M cameras based on the region in which the target subject is located in each image, where a location of the primary camera is related to a location of the target subject in the target region.

After the region in which the target subject is located in each of the images acquired by the M cameras is obtained, the primary camera may be determined from the plurality of cameras based on the region in which the target subject is located in each image.

In this embodiment of this application, to ensure that the region in which the target subject is located in the image for generating the free-viewpoint video does not have a problem such as off-axis or too small size, one primary camera may be selected from the plurality of cameras based on the region in which the target subject is located in each of the images acquired by the M cameras. The target subject in the image acquired by the primary camera has a relatively high display quality, and then image transformation may be performed on images acquired by other secondary cameras based on the primary camera, to improve a display quality of the target subject in the images acquired by the other secondary cameras.

Next, how to determine the primary camera from the plurality of cameras is described.

In an implementation, a target image that satisfies a first preset condition may be determined from the M images based on the region in which the target subject is located in each image, and a camera that acquires the target image is used as the primary camera, where the first preset condition includes at least one of the following:

Condition 1: an image in the M images and with the region in which the target subject is located being closest to a central axis of the image.

Because the target subject is a target that needs to be highlighted most in the free-viewpoint video, the region in which the target subject is located in the image acquired by the selected primary camera is required to be in a central region of the image, where the central region is a region of the image within a specific distance from the central axis of the image, for example, may be at a position with a 30% distance from the center.

Condition 2: an image in the M images and with the region in which the target subject is located accounting for a largest proportion of pixels in the image.

Because the target subject is a target that needs to be highlighted most in the free-viewpoint video, the region in which the target subject is located in the image acquired by the selected primary camera is required to cover a large area. To be specific, the region in which the target subject is located in the image acquired by the primary camera accounts for the largest proportion of pixels in the image among the M images.

Condition 3: an image in the M images and with the region in which the target subject is located having a largest pixel length in an image longitudinal axis direction of the image.

Because the target subject is a target that needs to be highlighted most in the free-viewpoint video, the pixel length, in the image longitudinal axis direction of the image, of the region in which the target subject is located in the image acquired by the selected primary camera is required to be greater than a preset value. For example, if the target subject is a person, the pixel length in the image longitudinal axis direction is a pixel length from the head to the feet of the person, and the region in which the target subject is located in the image acquired by the primary camera has the largest pixel length in the image longitudinal axis of the image among the M images.

It should be understood that the conditions described above can be combined with each other, which is not limited in this application.

It should be understood that the primary camera may be determined based on a relationship between an image and a camera position number. Specifically, one target image that satisfies the first preset condition may be determined from the M images, a target camera position number corresponding to a camera that acquires the target image may be obtained, and the camera corresponding to the target camera position number may be used as the primary camera.

In a possible implementation, at least one of the following relationships may be satisfied between the determined primary camera and the determined target subject:

Case 1: a distance between the primary camera and the target subject is less than a preset distance.

Because the target subject is a target that needs to be highlighted most in the free-viewpoint video, the target subject in the image acquired by the selected primary camera is required to have a relatively high image display quality. When the distance between the primary camera and the target subject is less than the preset distance, it can be ensured that the region in which the target subject is located in the image acquired by the primary camera accounts for a relatively large proportion of pixels in the image, so that the target subject in the image acquired by the primary camera has a relatively high image display quality. The preset distance may be related to a focal length of the camera and a size of the target region.

Case 2: the target subject is located at a center position of a region covered by a field-of-view angle of a lens of the primary camera.

Because the target subject is a target that needs to be highlighted most in the free-viewpoint video, the target subject in the image acquired by the selected primary camera is required to have a relatively high image display quality. When the location of the target subject in the target region is at a center position of a region to which the lens of the primary camera is directed (that is, the center position of the region covered by the field-of-view angle of the lens of the primary camera), it can be ensured that the region in which the target subject is located in the image acquired by the primary camera is in the central region of the image, so that the target subject in the image acquired by the primary camera has a relatively high image display quality.

Case 3: the target subject is completely imaged in the image acquired by the primary camera.

Because the target subject is a target that needs to be highlighted most in the free-viewpoint video, the target subject in the image acquired by the selected primary camera is required to have a relatively high image display quality. When there is no obstruction between the location of the primary camera and the location of the target subject in the target region, the target subject can be completely imaged in the image acquired by the primary camera, thereby ensuring that the region in which the target subject is located in the image acquired by the primary camera is not obscured by another obstruction, so that the target subject in the image acquired by the primary camera has a relatively high image display quality.

In a possible implementation, a target camera position number corresponding to the camera that acquires the target image may be obtained, and the camera corresponding to the target camera position number may be used as the primary camera.

It should be understood that, in an implementation, a camera image acquired by the determined primary camera may further be presented on a user terminal. If the user is not satisfied with this camera being selected as the primary camera, the primary camera may be reset through manual selection.

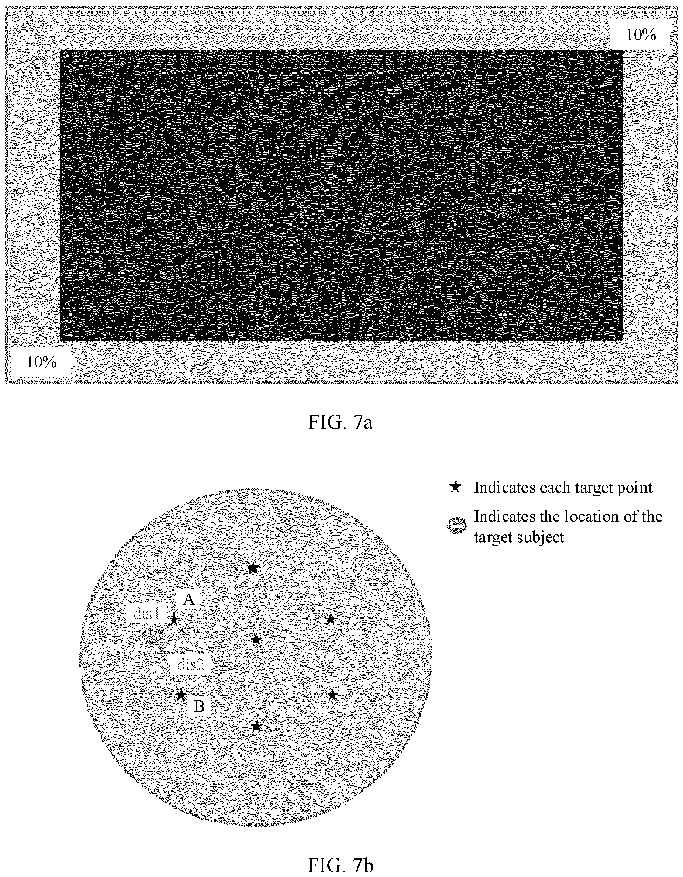

Specifically, the region in which the target subject is located in the image acquired by each camera may be obtained in real time, and the location of the region in which the target subject is located in the image acquired by each camera may be determined. Referring to FIG. 7a, when the region in which the target subject is located moves to a specific range (for example, a 10% range) from an edge of a screen at a camera position, the primary camera may be reselected. Next, how to reselect the primary camera is described.

In an implementation, positions of the plurality of cameras are fixed in an interface of the user terminal, and it may be suggested that the user reselects a subject closer to the center of the screen as the surround center (if there are a plurality of subjects). If there is only one subject in the images acquired by the plurality of cameras, it may be suggested on the user terminal to replace the image frame, which is significantly off-center. Alternatively, it is suggested that the user discards some camera images (for example, an image with the center of the subject being within 10% from an edge of the image).

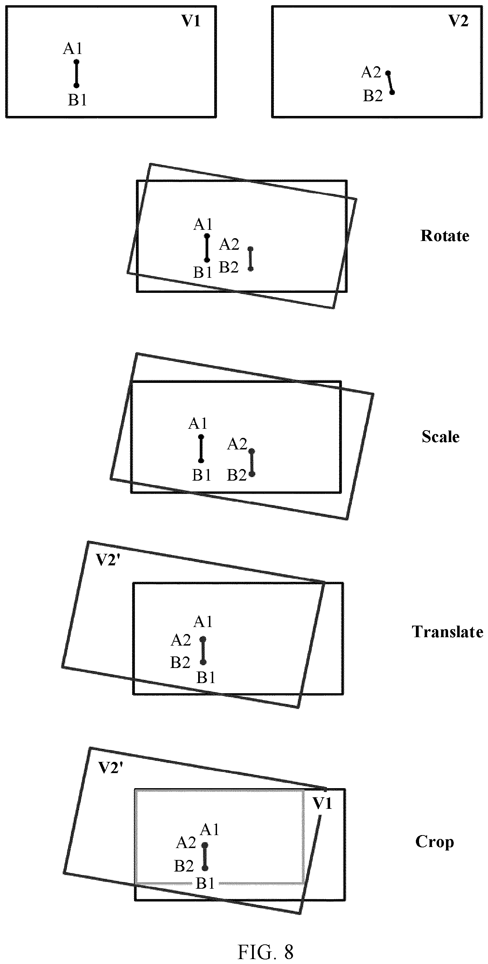

In an implementation, when orientations of the cameras can be rotated, during the offline calibration process, as shown in FIG. 8, some predetermined center point positions are set, and multiple sets of offline calibration files are generated. When the primary camera needs to be reselected, a distance between the target subject and each predetermined center point may be calculated (as in FIG. 8, dis1 < dis2, and then A is selected as a new orientation position), a better center of the orientations of the cameras may be selected, and the orientations of all the cameras are precisely adjusted through an electric gimbal head. Then, the primary camera is reselected using the foregoing primary camera selection method based on the first preset condition.

It should be understood that when a precision of the electric gimbal head for controlling the orientations of the cameras is insufficient, the calibration may be achieved through online calibration.

304: Determine N secondary cameras from the M cameras based on the primary camera.

In an implementation, N1 cameras in the clockwise direction from the primary camera and N2 cameras in the counterclockwise direction from the primary camera in the M cameras may be used as secondary cameras, where the sum of N1 and N2 is N. A gap between camera positions of the N cameras and the primary camera is within a preset range. Because images acquired by the secondary cameras may also be used as the basis for generating the free-viewpoint video, it is necessary to ensure that the images acquired by the secondary cameras are of high quality. Because the target subject in the image acquired by the primary camera has a relatively high display quality, and the image acquired by the primary camera is used as a reference for the secondary cameras to perform image transformation, the N cameras with a gap between the camera positions thereof and the primary camera being within the preset range may be used as the secondary cameras.

In a possible implementation, N1 is a first preset value, and N2 is a second preset value.

In a possible implementation, N1 = N2, that is, a half of the N secondary cameras are located in the clockwise direction from the primary camera, and the other half are located in the counterclockwise direction from the primary camera.

In a possible implementation, the one primary camera and the N secondary cameras are cameras with consecutive camera numbers. When the free-viewpoint video is a frozen-moment surround video, to ensure smooth transition between the image frames in the generated free-viewpoint video, it is necessary to ensure that the camera positions of the cameras that acquire images are adjacent to each other, that is, the cameras with consecutive camera positions need to be selected from the plurality of cameras as the secondary cameras. To put it another way, each selected secondary camera should be directly or indirectly connected to the primary camera.

In a possible implementation, a distance between the region in which the target subject is located in images acquired by the N secondary cameras and the central axis of the image is less than a preset value. Because images acquired by the secondary cameras may also be used as the basis for generating the free-viewpoint video, it is necessary to ensure that the images acquired by the secondary cameras are of high quality. Specifically, a plurality of cameras with a distance between the region in which the target subject is located in the acquired image and the central axis of the image being within a preset range may be used as the secondary cameras.

In a possible implementation, the target subject is completely imaged in the images acquired by the N secondary cameras. Because images acquired by the secondary cameras may also be used as the basis for generating the free-viewpoint video, it is necessary to ensure that the images acquired by the secondary cameras are of high quality. Specifically, N cameras with the target subject being not obscured by another obstruction in the acquired images may be used as the secondary cameras.

In an implementation, the plurality of cameras except the primary camera may be used as the secondary cameras.

In an implementation, the primary camera may be used as a middle camera position, extending a specific angle to the left and right (for example, all cameras included by extending 30 degrees from the center point of an orientation of the current camera to the left and right are the secondary cameras). It should be understood that the user may select a degree of extension on the user terminal.

It should be understood that the conditions described above can be combined with each other, which is not limited herein.

305: Generate a free-viewpoint video based on images acquired by the one primary camera and the N secondary cameras at a second moment, where a region in which the target subject is located in the free-viewpoint video is related to a region in which the target subject is in the image acquired by the primary camera at the second moment.

In this embodiment of this application, after the one primary camera and the N secondary cameras are determined from the M cameras, a free-viewpoint video may be generated based on images acquired by the primary camera and the N secondary cameras.

It should be understood that during the generation of the free-viewpoint video, if the free-viewpoint video is the foregoing frozen-in-time surround video, camera position numbers of the one primary camera and the N secondary cameras may be obtained, and based on an order of the camera position numbers of the one primary camera and the N secondary cameras, time domain arrangement and subject alignment are performed on N+1 images acquired by the one primary camera and the N secondary cameras at the second moment, to generate the free-viewpoint video.

In this embodiment of this application, the target subject in the image acquired by the primary camera has a relatively high display quality, and the image acquired by the primary camera can be used as a reference for the secondary cameras to perform the subject alignment.

In a possible implementation, the performing subject alignment on N+1 images acquired by the one primary camera and the N secondary cameras at the second moment includes at least one of the following:

Alignment method 1: scaling the N images acquired by the N secondary cameras at the second moment, by using a region in which the target subject is located in the image acquired by the one primary camera at the second moment as a reference. Specifically, the N images acquired by the N secondary cameras at the second moment may be scaled based on the region in which the target subject is located in the image acquired by the one primary camera at the second moment, to obtain N scaled images. A difference between pixel lengths, in the image longitudinal axis direction of the image, of the image acquired by the one primary camera and the region in which the target subject is located in the N scaled images is within a preset range.

Due to different distances between different camera positions and the target subject, the target object in images shot by cameras at the different camera positions at the same moment has different sizes. To ensure that two consecutive frames of the free-viewpoint video transition very smoothly, without a significant change in size, it is necessary to scale the images acquired by the cameras at the different camera positions, so that there is a relatively small difference between the size of the target subject in the scaled images and that of the target subject in the image acquired by the primary camera.

Alignment method 2: rotating the N images acquired by the N secondary cameras at the second moment, by using a region in which the target subject is located in the image acquired by the one primary camera at the second moment as a reference.

The N images acquired by the N secondary cameras at the second moment may be rotated based on the region in which the target subject is located in the image acquired by the one primary camera at the second moment, to obtain N rotated images. A difference of the target subject, in the direction from a top region to a bottom region, between the image acquired by the one primary camera and the N rotated images is within a preset range.

Because poses of cameras at different camera positions may be different and may not be on the same horizontal line, a direction of the target object in the image varies between images shot by the cameras at the different camera positions at the same moment. To ensure that two consecutive frames of the free-viewpoint video transition very smoothly, it is necessary to rotate the images acquired by the secondary cameras, so that there is a relatively small difference between the pose of the target subject in the rotated images and that of the target subject in the image acquired by the primary camera.

Alignment method 3: cropping each of the images acquired by the one primary camera and the N secondary cameras at the second moment, based on the region in which the target subject is located in each of the images acquired by the one primary camera and the N secondary cameras at the second moment. Specifically, each of the images acquired by the one primary camera and the N secondary cameras at the second moment may be cropped based on the region in which the target subject is located in each of the images acquired by the one primary camera and the N secondary cameras at the second moment, to obtain N+1 cropped images. The target subject in the N+1 cropped images is located in a central region, and the N+1 cropped images have the same size.

To ensure that the target person in each image frame of the free-viewpoint video is located in the central region, the image may be cropped based on the region in which the target subject is located in the image acquired by each of the primary camera and the plurality of secondary cameras, so that the target subject is located in the central region of the cropped image.

Next, as an example, the free-viewpoint video is a frozen-moment surround video, and how to arrange the images after the subject alignment is described. Specifically, the secondary cameras include a first camera that is adjacent to the primary camera in position. The first image acquired by the target camera and a second image acquired by the first camera may be obtained, where a moment at which the first camera acquires the second image is the same as the moment at which the primary camera acquires the first image. The region in which the target subject is located in the first image may be determined, and the first image may be cropped based on the region in which the target subject is located in the first image, to obtain a first cropped image. In addition, a region in which the target subject is located in the second image may be determined, and the second image may be based on the region in which the target subject is located in the second image, to obtain a second cropped image, where a central region of the second cropped image includes the target subject. The first cropped image and the second cropped image are used as image frames of the free-viewpoint video, and in the free-viewpoint video, the second cropped image and the first cropped image are separated by M image frames in time domain. The M image frames are obtained by performing image synthesis for M viewpoints based on the first cropped image and the second cropped image, and the M viewpoints are viewpoints between the primary camera and the first camera.

It should be understood that a quantity of the cameras (or a quantity of the images acquired) and a frame rate at which the camera acquires an image may determine a length of the generated free-viewpoint video.

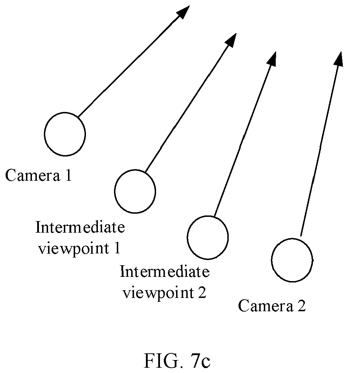

To ensure that the free-viewpoint video is smoother or that frame rate requirements of the free-viewpoint video are required (such as 25 frames/s, 100 frames/s, or 200 frames/s), it is necessary to perform image synthesis based on image frames acquired by cameras at two adjacent camera positions, which is a frame interpolation operation, to obtain M image frames. The M image frames are obtained by performing image synthesis for M viewpoints based on the first cropped image and the second cropped image, and the M viewpoints are viewpoints between the primary camera and the first camera. For example, referring to FIG. 7c, a third cropped image and the first cropped image are separated by two image frames in time domain. The two image frames are obtained by performing image synthesis for two viewpoints based on the first cropped image and the second cropped image. The two viewpoints are viewpoints between the primary camera and the first camera (an intermediate viewpoint 1 and an intermediate viewpoint 2 in FIG. 7c), which is equivalent to that the two image frames are image frames acquired from the intermediate viewpoint 1 and the intermediate viewpoint 2.

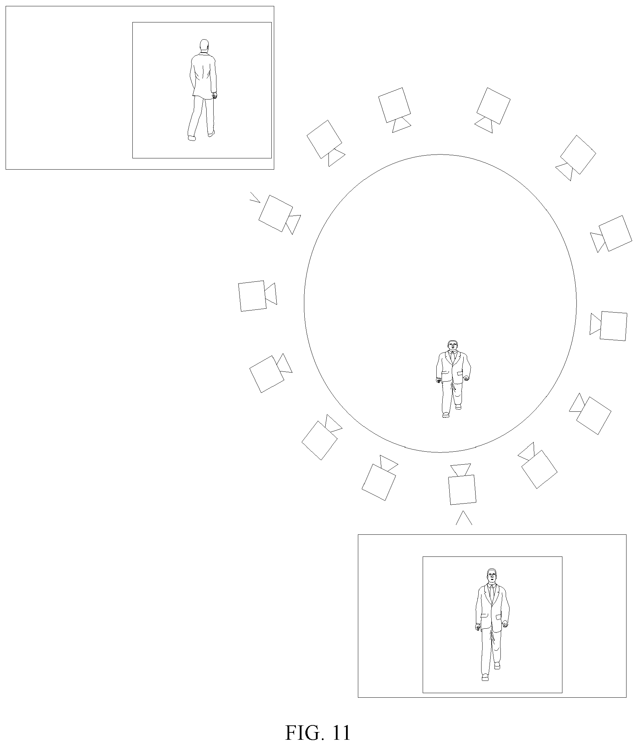

A location of the target subject in the second image is different from that of the target subject in the first image. Specifically, reference may be made to FIG. 11. It can be seen from FIG. 11 that, the location of the target subject in the second image (for example, an image acquired by a lower camera in FIG. 11) is near the central region, and the location of the target subject in the first image (for example, an image acquired by an upper left camera in FIG. 11) is in the right region.

Next, an illustration of how to rotate and scale the images acquired by the secondary cameras is described.

In an embodiment of this application, virtual viewing angle transformation may be calculated first. Specifically, with reference to two-dimensional coordinates of the central axis of the target subject for the selected primary camera, two-dimensional coordinates of the central axis of the subject in images at all other camera positions may be aligned with the central axis of the selected primary camera through a transformation matrix. In addition, a focused viewing angle transformation matrix centered on the selected central axis is generated for each camera.

Referring to FIG. 8, the three-dimensional world points AB of the central axis are obtained through triangulation; and the calibration result RT matrix of each camera that is generated offline is input (the calibration result is an original calibration file, and the original calibration file includes intrinsic parameters of each camera and extrinsic RT matrices for conversion between a two-dimensional image and a three-dimensional world point of each camera). A corresponding location of the three-dimensional central axis AB at each camera position is separately calculated by invoking the original calibration file (where (Xw, Yw, Zw) are world coordinates, fx, fy, cx, and cy are intrinsic parameters of the camera, and u and v are two-dimensional image coordinates corresponding to the world coordinates), to obtain two-dimensional coordinate points (A1, B1) and (A2, B2) of the two points in the images of the cameras V1 and V2.

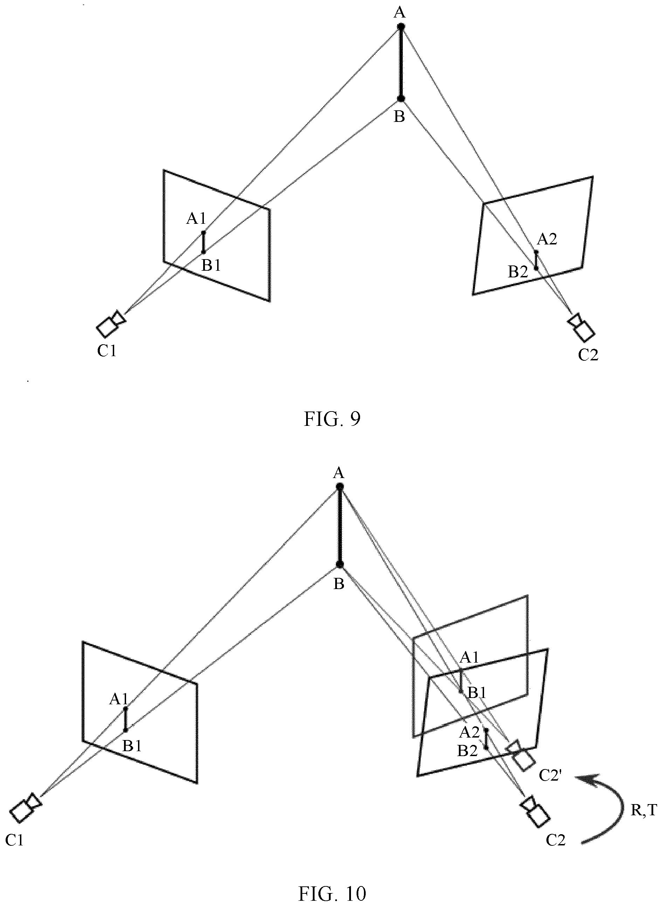

Assuming that V1 (that is, the primary camera) is selected as the primary camera, coordinate points of (A2', B2') and (A1, B1) are made exactly the same by rotating, translating, and scaling (A2, B2) in the image of the V2 (that is, the secondary camera) camera. The matrix of rotation, translation, and scaling is integrated with the original calibration file to obtain an updated V2 extrinsic file (the extrinsic file herein contains the intrinsic parameters of each camera and a warp matrix based on V1 and obtained through rotation, translation, scaling, and cropping of the images of the other camera positions and V1 shown in the figure below). For example, if there are N cameras in the entire system, similarly, an extrinsic matrix of each of the other cameras for the three-dimensional world points AB can be obtained, and a common region of images updated by the N cameras can be cropped. For a subsequent camera image of each camera, with the updated extrinsic file, an original image shot can be rotated, translated, scaled, and cropped based on the warp matrix in the extrinsic file, to obtain an image of each camera that is rotated with AB as the three-dimensional central axis and (A1, B1) as the two-dimensional central axis. Referring to FIG. 9 and FIG. 10, FIG. 9 is an image before the virtual viewpoint transformation, and FIG. 10 is an image after the virtual viewpoint transformation.

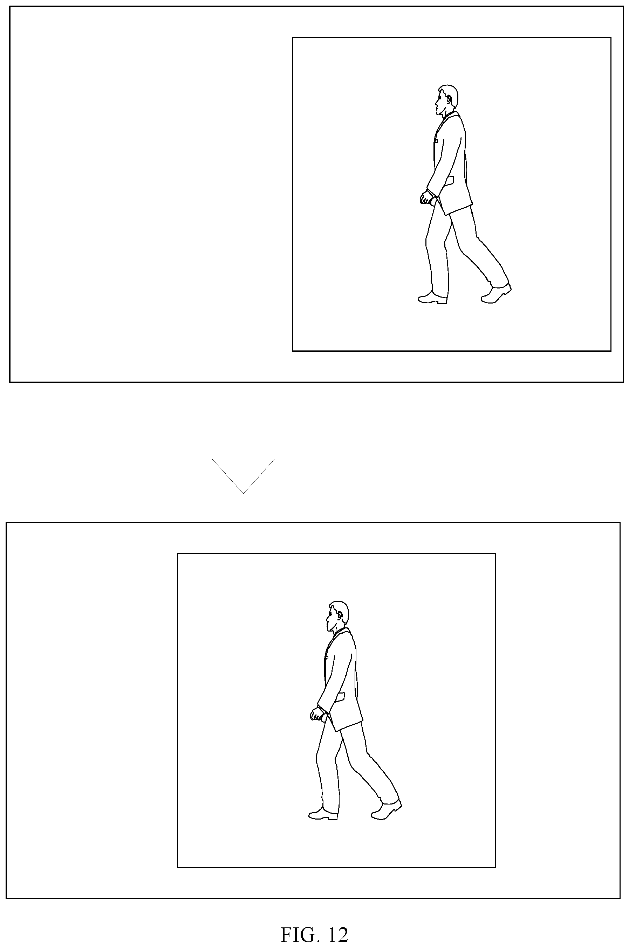

In addition, reference may be made to FIG. 12. FIG. 12 illustrates cropping an image. In this embodiment of this application, to ensure that the target subject in each image frame of the free-viewpoint video is located in the central region, the images acquired by the primary camera and the plurality of secondary cameras may be cropped based on the region in which the target subject is located in the image acquired by the primary camera and the plurality of secondary cameras, so that the target subject is located in the central region of the cropped images.

It should be understood that different subjects may be selected as content displayed in the central region of the video at different moments of the free-viewpoint video. As an example, a first subject (a subject different from the target subject) is enabled before the target subject is enabled. The first subject in the target region may be identified, and then the selection of the first subject is enabled, and where the first subject is different from the target subject. The images acquired by the primary camera and the plurality of secondary cameras are cropped based on the region in which the first subject is located in the images acquired by the primary camera and the plurality of secondary cameras, so that the first subject is located in the central region of the cropped images.

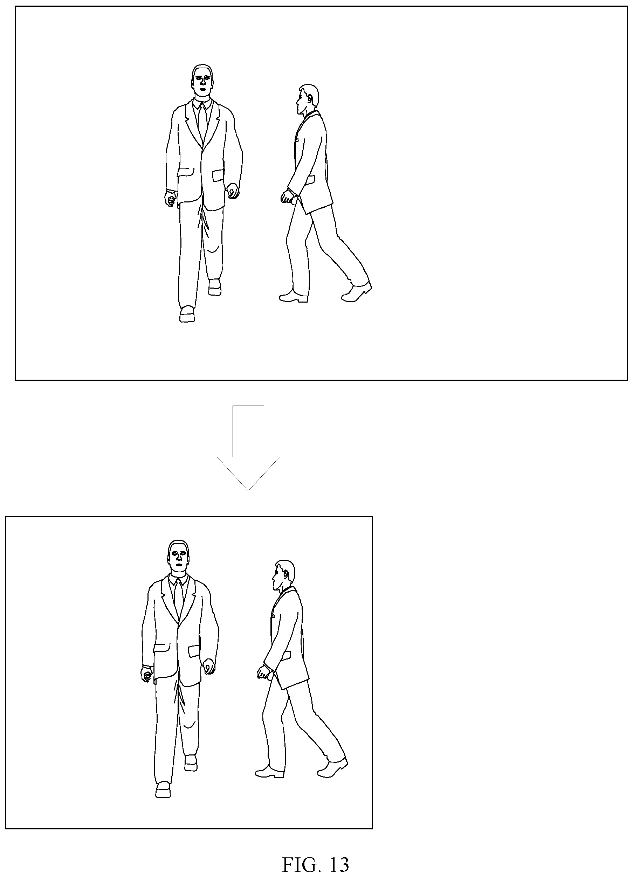

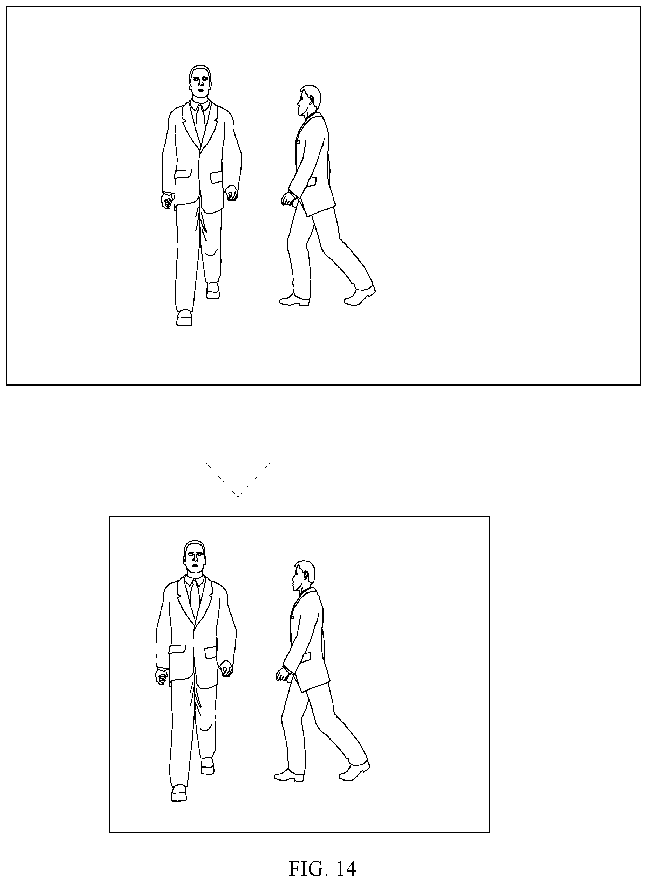

Referring to FIG. 13 and FIG. 14, as shown in FIG. 13, if the selection of the left subject (that is, the first subject in this embodiment) is enabled, the central region of the cropped image includes the left subject; as shown in FIG. 14, if the selection of the right subject (that is, the target subject in this embodiment) is enabled, the central region of the cropped image includes the right subject.

It should be understood that in the free-viewpoint video, the first subject may be switched and transitioned gradually and smoothly to the target subject, that is, when the selected subject is changed, the central axis is gradually and smoothly changed to a location of a subject selected the second time.

In a possible implementation, the first moment is the same as the second moment. In other words, the images used for determining the primary camera and the N secondary cameras and the images used for generating the free-viewpoint video are acquired by the primary camera and the secondary cameras at the same moment.

Alternatively, the first moment is different from the second moment. Then the images acquired by the one primary camera and the N secondary cameras at the second moment may further be obtained, and the images acquired by the one primary camera and the N secondary cameras at the second moment are used for generating the free-viewpoint video.

It should be understood that during the generation of a free-viewpoint video, if the free-viewpoint video is the above-mentioned time-varying surround video, images acquired by the primary camera and the N secondary cameras at a moment different from the second moment may further be obtained, and the free-viewpoint video is generated based on the images acquired by the primary camera and the N secondary cameras at the moment different from the second moment.

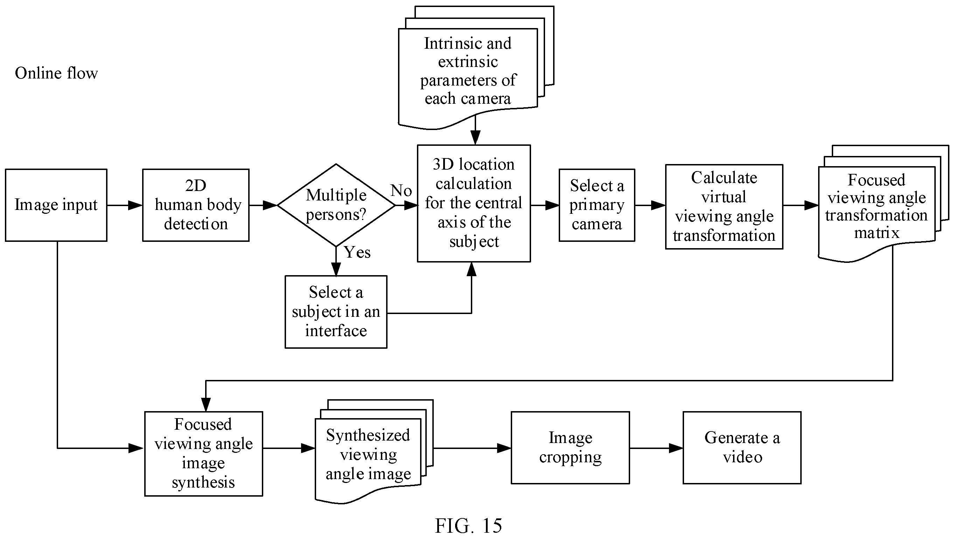

Specifically, reference may be made to FIG. 15. FIG. 15 illustrates a complete process of performing image transformation on the images acquired by the secondary cameras based on the image acquired by the primary camera.

In a possible implementation, a gimbal head for the camera may be a high-precision mechanical gimbal head. Before shooting, several central rotation axes are predetermined based on the site and an active location of the subject, and all cameras are aimed at the several central rotation axes. A precise direction of the gimbal head is saved, and camera poses for the predetermined central axes are calibrated offline, to generate camera extrinsic parameters corresponding to the central axes. During the recording process, if the location of the subject in the image is far away from the center of the image of the site (if the location of the subject deviates to a specific extent, for example, exceeds 1/3 of the image size from the center of an image at a camera position, the location of the subject is compared with coordinates of all the predetermined central axes, and a direction of a central axis closest to the location of the subject is selected), the gimbal head is precisely adjusted to a predetermined camera direction, and then camera extrinsic parameters for this direction are invoked.

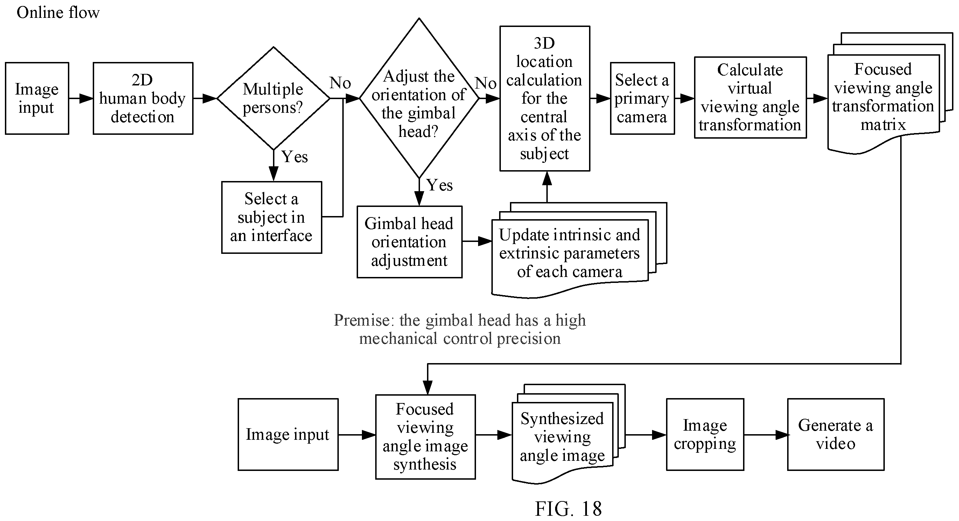

Specifically, reference may be made to FIG. 18. FIG. 18 illustrates a process of generating a free-viewpoint video based on an offline calibration result.

Specifically, in this embodiment of this application, the target region may include a first target point and a second target point; the location of the target subject in the target region may be obtained; based on a distance between the location of the target subject and the first target point being less than that from the second target point, the lenses of the plurality of cameras may be controlled to change from being directed to the second target point to being directed to the first target point; and then images acquired by the plurality of cameras when the centers of the lenses are directed to the first target point (specifically, as shown in FIG. 7b).

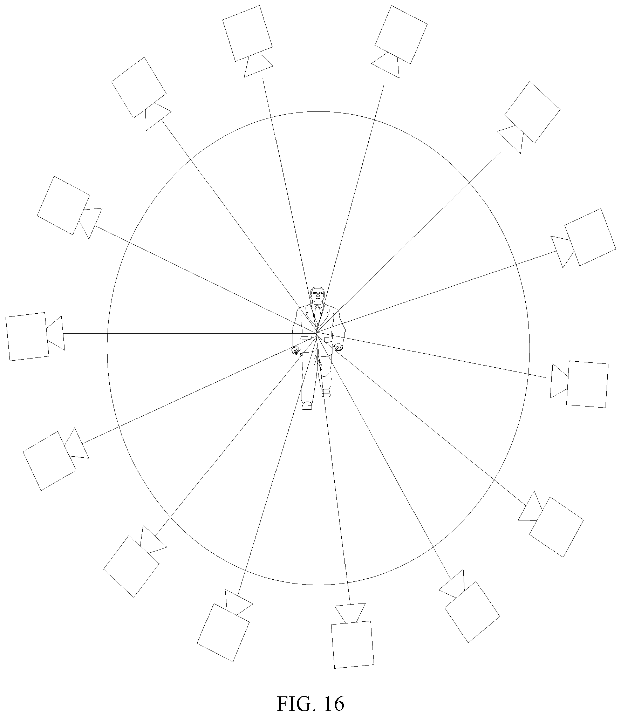

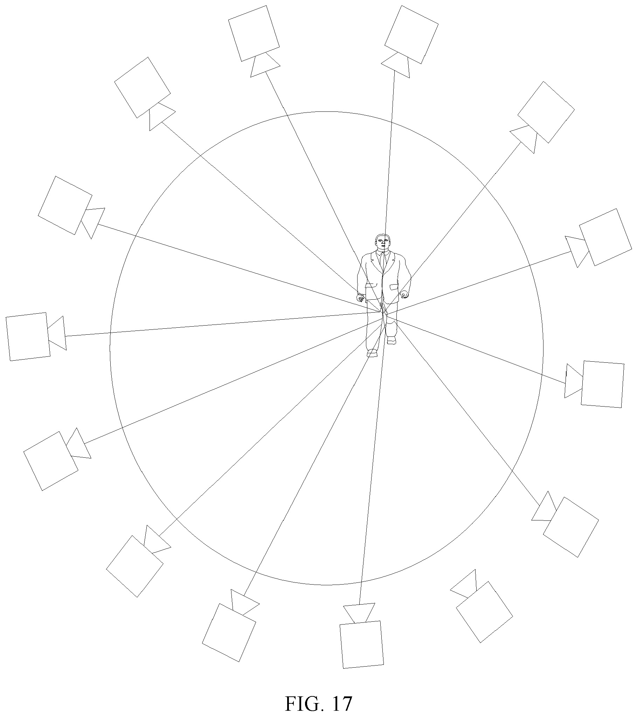

Through the foregoing method, it is possible to obtain a surround video that retains a relatively large image size and automatically follows the selected subject as the central axis. Referring to FIG. 16 and FIG. 17, because the target subject is located at the first target point closer to the center point of the target region at a moment, the gimbal head may control the cameras so that the centers of the lenses of the cameras are directed to the first center point near the center point of the target region; and when it is identified that the target subject is closer to the second target point that is farther from the center point of the target region, the gimbal head may control the cameras so that the centers of the lenses of the cameras are directed to the second target point.

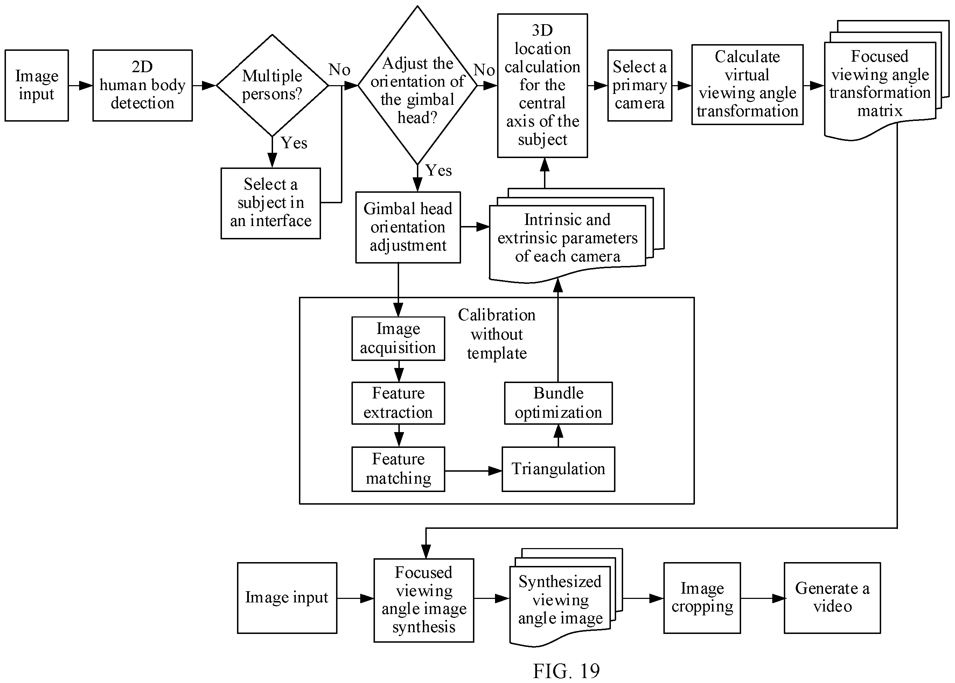

In a possible implementation, after a position of the gimbal head is adjusted, online calibration may be provided to obtain extrinsic parameters of each camera. As shown in FIG. 19, online calibration is added in this embodiment, the cameras may be rotated to the direction centered on the selected subject, and through online calibration without a template, a surround video that retains a maximum image size and automatically follows the selected subject as the central axis is obtained. In this embodiment, online template-free calibration is added, the selected subject is used as the center, a larger image size is retained, and the image quality is better.

Through the foregoing method, the images acquired by the primary camera and the plurality of secondary cameras at various moments can be obtained, and then images are selected based on specific rules and arranged in time domain to generate a free-viewpoint video. The rules may be automatically generated or specified by the user (such as the director).

In this embodiment, after being generated, the free-viewpoint video may be sent to the terminal device. The terminal device may display the free-viewpoint video.

An embodiment of this application provides an image processing method. The method includes: determining a target subject; obtaining M images, where the M images are images respectively acquired by M cameras for the target subject at a first moment, the M cameras are arranged around a target region, lenses of the M cameras are directed to the target region, and the target subject is within the target region; and determining a region in which the target subject is located in each of the M images; and determining a region in which the target subject is located in each of the M images; determining one primary camera from the M cameras based on the region in which the target subject is located in each image, where a location of the primary camera is related to a location of the target subject in the target region; determining N secondary cameras from the M cameras based on the primary camera; and where a location of the primary camera is related to a location of the target subject in the target region; generating a free-viewpoint video based on images acquired by the one primary camera and the N secondary cameras at a second moment, where a region in which the target subject is located in the free-viewpoint video is related to a region in which the target subject is in the image acquired by the primary camera. Through the foregoing method, the primary camera and the secondary cameras are selected based on the region in which the target subject is located in each of the images acquired by the M cameras. Therefore, an image providing a better display location for the region in which the target subject is located can be selected, and a camera that acquires the image is used as the primary camera. The free-viewpoint video is generated based on the images acquired by the primary camera and the secondary cameras, so that a video effect of the target subject in the free-viewpoint video is improved.

Next, how to enable the selection of the target subject is described with reference to the interaction with the user.

In an implementation, the interface may be displayed on a terminal interface of a terminal used by the director when synthesizing a free-viewpoint video, or may be used on a terminal interface of a terminal (such as a mobile phone, a tablet computer, and a laptop computer) used by a viewer. The foregoing terminal interface may also be referred to as a target interface in the subsequent embodiments.

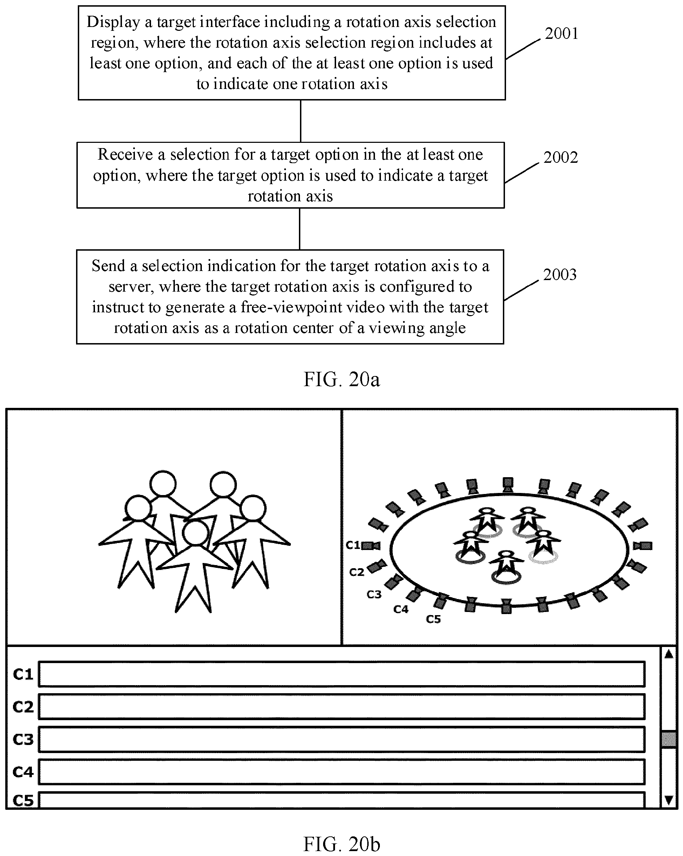

Referring to FIG. 20a, FIG. 20a illustrates a flow of a subject selection method, applied to a terminal device, according to an embodiment of this application. The method includes the following:

2001: Display a target interface including a rotation axis selection control, where the rotation axis selection control is configured to instruct to select a rotation axis.

In a possible implementation, the rotation axis selection control is configured to instruct to select the rotation axis from a location point in a target region.

In a possible implementation, the rotation axis selection control is configured to instruct to select the rotation axis from a plurality of subjects in a target region.

A user can select, through the rotation axis selection control in the target interface, a rotation axis that is used as the target rotation axis for a rotation center of a viewing angle during the generation of a free-viewpoint video, where the rotation axis may be a location point in the target region, for example, a center point of the target region or another point at a specific distance from the center point; or the rotation axis may be a subject, such as a person.

For example, the rotation axis is a subject. Referring to FIG. 20b, FIG. 20b illustrates a target interface according to an embodiment of this application. The interface shown in FIG. 20b may include three windows, namely, a 2D display window, a 3D display window (that is, the above-mentioned rotation axis selection region), and a frame selection window.

In an implementation, each of the at least one option is further used to indicate a location of the corresponding subject in the target region. The upper right sub-window in FIG. 20b may be the 3D display window. The 3D display window may include various camera positions (such as C1 to C5 in FIG. 20b) arranged around. Circles in the site represent locations of 3D central axes of various detected subjects. The subjects can be presented in various forms (for example, paperman, 3D-avatar, subject avatar and name, and the like). An actual location of the subject may be obtained by the server through the calculation related to the physical location of the subject in the embodiment corresponding to FIG. 3, and transmitted to the terminal device, and then the terminal device displays the location of the subject in the target region.

The upper left sub-window in FIG. 20b is the 2D display window, which is used to represent an image acquired by a camera at a current viewing angle. The image may be an original image acquired or an image obtained through image transformation. If the camera is the primary camera, the upper left sub-window may display the original image acquired by the primary camera, or an image obtained by cropping (such as cropping to remove the black edge and retain the central region) the original image acquired by the primary camera.

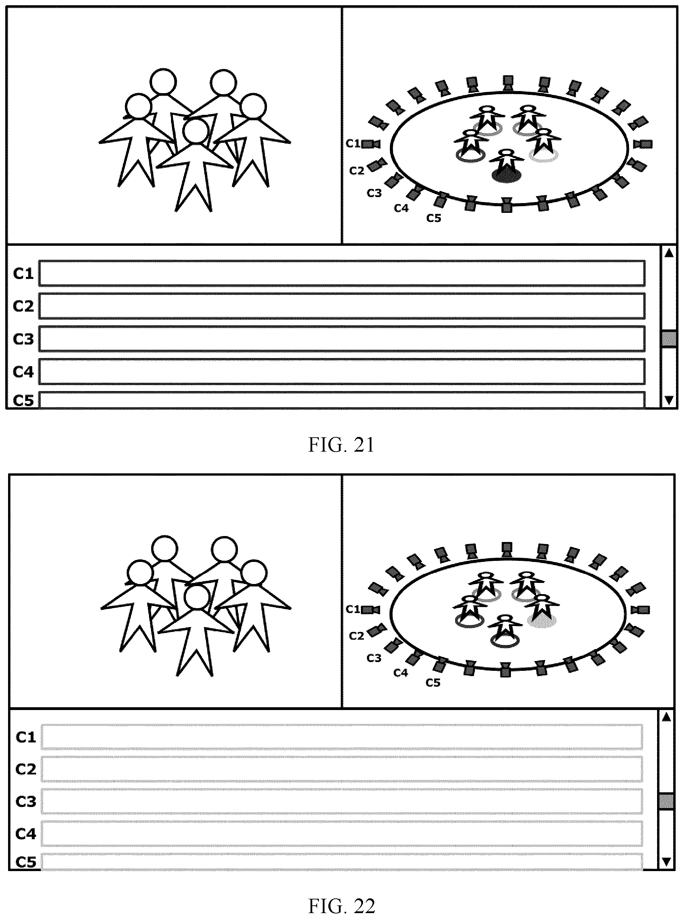

The lower sub-window is the frame selection window, which presents a sequence of image frames acquired by each camera, with each row representing one camera position. These images may be original shots or images obtained through image transformation. When a different subject is selected as the surround center, the sequence of key frame images in the frame selection window is updated accordingly. FIG. 21 and FIG. 22 are respectively interfaces after the selection of different subjects. After the subject is selected, the frame selection window is image frames at all camera positions that are transformed according to the selected central axis.

2002: Receive a selection operation for a target rotation axis.

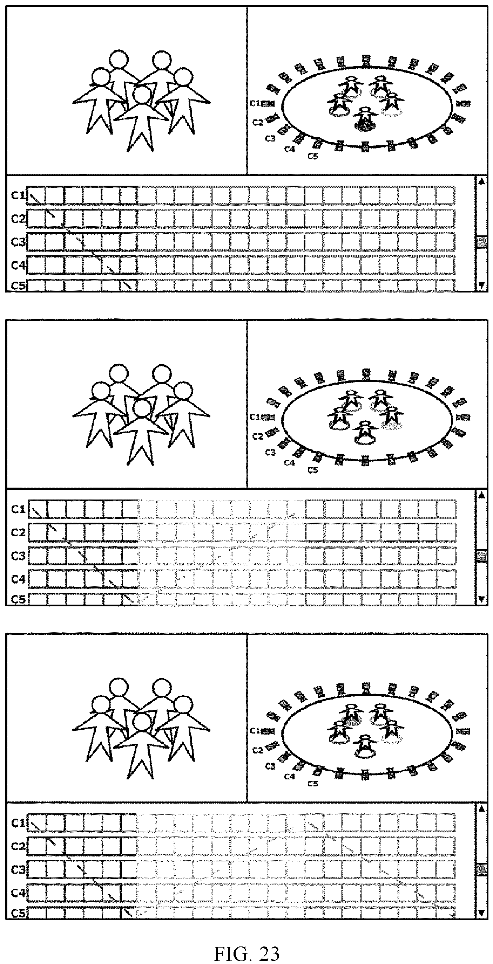

For example, the rotation axis is the subject, the frame selection window in FIG. 23 represents the sequence of image frames, and C1 to C5 represent multi-camera viewing angles. In this figure, taking five cameras as an example, a description of changing the subject three times is provided: First, C1 is selected as the primary camera, and the dark subject (the lower subject in FIG. 23) is selected as a surrounded subject, to perform image transformation on other camera positions. Then the first segment of images selected is from the first camera to the last camera. As the camera positions increase one by one, image frames are also shifted backward frame by frame. When the last camera is reached, the lower right subject in FIG. 23 is selected as the surrounded subject. Then all other cameras use the last camera as the primary camera and a location of the lower right subject in FIG. 23 as the central axis to perform image transformation on the other camera images. In addition, the viewing angle reversely rotates from the last camera back to the first camera, and as the camera positions decrease one by one, image frames are also shifted backward frame by frame. When the viewing angle returns to C1, the upper left subject in FIG. 23 is selected as the surrounded subject, and the other cameras use this subject as the central axis to perform image transformation. Then the image frames selected are still images obtained through refocusing transformation in which as the camera positions increase one by one, image frames are also shifted backward frame by frame.

In this embodiment, during the generation of the free-viewpoint video, different subjects from the same viewing angle may be randomly selected, or images from different viewing angles for the same image frame may be selected.

2003: Send a selection indication for the target rotation axis to a server, where the target rotation axis is configured to instruct to generate a free-viewpoint video with the target rotation axis as a rotation center of a viewing angle.

Then the terminal device may send the selection indication for the target rotation axis to the server, and the server may generate the free-viewpoint video with the target rotation axis as the rotation center of the viewing angle based on the selection indication for the target rotation axis.

In an implementation, the target rotation axis is a target subject, and the target subject is further used to indicate to determine a primary camera from the M cameras, where a region in which the target subject is located in the free-viewpoint video is related to a region in which the target subject is in an image acquired by the primary camera. For how to determine the primary camera from the M cameras, reference may be made to the description in the foregoing embodiment corresponding to FIG. 3, and details are not repeated herein.

In an implementation, a selection indication for the primary camera that is sent by the server may further be received, where the primary camera is one of the M cameras. Based on the selection indication for the primary camera, an indication of the selected primary camera is displayed in the target interface. The 3D display window may include various camera positions (such as C1 to C5 in FIG. 20b) arranged around. The camera position of the primary camera among the camera positions may be highlighted, or the camera position of the primary camera may be indicated to the user in the form of text.

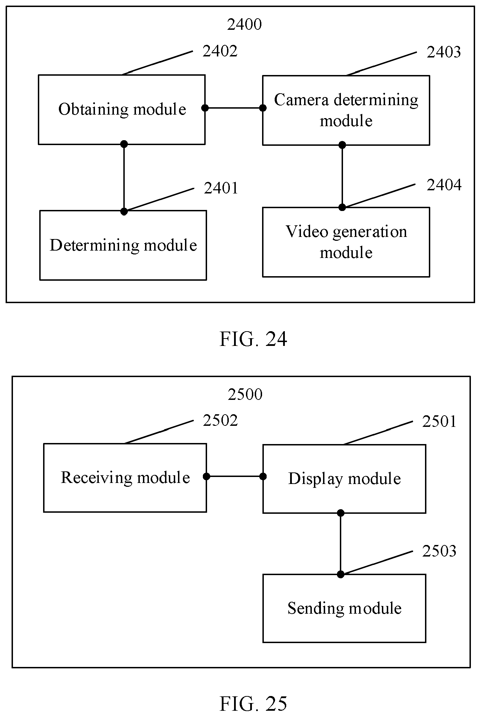

Referring to FIG. 24, FIG. 24 illustrates a structure of an image processing apparatus according to an embodiment of this application. As shown in FIG. 24, the apparatus 2400 includes a determining module 2401, an obtaining module 2402, a camera determining module 2403, and a video generation module 2404.

The determining module 2401 is configured to determine a target subject.

For a specific description of the determining module 2401, reference may be made to the description of step 301, and details are not repeated herein.

The obtaining module 2402 is configured to obtain M images, where the M images are images respectively acquired by M cameras for the target subject at a first moment, the M cameras are arranged around a target region, lenses of the M cameras are directed to the target region, and the target subject is within the target region; and determine a region in which the target subject is located in each of the M images.

For a specific description of the obtaining module 2402, reference may be made to the description of step 302, and details are not repeated herein.

The camera determining module 2403 is configured to determine one primary camera from the M cameras based on the region in which the target subject is located in each image, where a location of the primary camera is related to a location of the target subject in the target region; and determine N secondary cameras from the M cameras based on the primary camera.

For a specific description of the camera determining module 2403, reference may be made to the description of step 303, and details are not repeated herein.

The video generation module 2404 is configured to generate a free-viewpoint video based on images acquired by the one primary camera and the N secondary cameras at a second moment, where a region in which the target subject is located in the free-viewpoint video is related to a region in which the target subject is in the image acquired by the primary camera at the second moment.

For a specific description of the video generation module 2404, reference may be made to the description of step 304, and details are not repeated herein.

In a possible implementation, the camera determining module is specifically configured to determine a target image that satisfies a first preset condition from the M images based on the region in which the target subject is located in each image, and use a camera that acquires the target image as the primary camera, where the first preset condition includes at least one of the following:

an image in the M images and with the region in which the target subject is located being closest to a central axis of the image; or
an image in the M images and with the region in which the target subject is located accounting for a largest proportion of pixels in the image; or
an image in the M images and with the region in which the target subject is located having a largest pixel length in an image longitudinal axis direction of the image.

In a possible implementation, the camera determining module is specifically configured to obtain a target camera position number corresponding to the camera that acquires the target image, and use the camera corresponding to the target camera position number as the primary camera.

In a possible implementation, a distance between the primary camera and the target subject is less than a preset distance; or

the target subject is located at a center position of a region covered by a field-of-view angle of a lens of the primary camera; or
the target subject is completely imaged in the image acquired by the primary camera.

In a possible implementation, the camera determining module is specifically configured to use N1 cameras in the clockwise direction from the primary camera and N2 cameras in the counterclockwise direction from the primary camera in the M cameras as secondary cameras, where the sum of N1 and N2 is N.

In a possible implementation, the one primary camera and the N secondary cameras are cameras with consecutive camera numbers; or

a distance between the region in which the target subject is located in images acquired by the N secondary cameras and the central axis of the image is less than a preset value; or
the target subject is completely imaged in the images acquired by the N secondary cameras, or
N1 is a first preset value, and N2 is a second preset value; or
N1 = N2.

In a possible implementation, the video generation module is specifically configured to obtain camera position numbers of the one primary camera and the N secondary cameras; and
perform, based on an order of the camera position numbers of the one primary camera and the N secondary cameras, time domain arrangement and subject alignment on N+1 images acquired by the one primary camera and the N secondary cameras at the second moment, to generate the free-viewpoint video.

In a possible implementation, the performing subject alignment on N+1 images acquired by the one primary camera and the N secondary cameras at the second moment includes at least one of the following:

scaling the N images acquired by the N secondary cameras at the second moment, by using a region in which the target subject is located in the image acquired by the one primary camera at the second moment as a reference; or
rotating the N images acquired by the N secondary cameras at the second moment, by using a region in which the target subject is located in the image acquired by the one primary camera at the second moment as a reference; or
cropping each of the images acquired by the one primary camera and the N secondary cameras at the second moment, based on the region in which the target subject is located in each of the images acquired by the one primary camera and the N secondary cameras at the second moment.

In a possible implementation, the determining module is configured to identify at least one subject in the target region;

send information about each of the at least one subject to a terminal device; and
determine the target subject by receiving a selection indication sent by the terminal device for the target subject in the at least one subject.

In a possible implementation, the determining module is configured to
determine the target subject by identifying that the subject in the target region includes only the target subject.

In a possible implementation, the target region includes a first target point and a second target point, and the obtaining module is further configured to obtain a location of the target subject in the target region;

control, based on a distance between the location of the target subject and the first target point being less than that from the second target point, the lenses of the M cameras to change from being directed to the second target point to being directed to the first target point; and
obtain the M images acquired by the M cameras when the lenses are directed to the first target point.

In a possible implementation, the obtaining module is configured to obtain a first location of the target subject in a physical space and intrinsic and extrinsic parameters of the M cameras; and
determine the region in which the target subject is located in each of the M images based on the first location and the intrinsic and extrinsic parameters of the M cameras.

In a possible implementation, the first moment is the same as the second moment; or
the first moment is different from the second moment; and the obtaining module is further configured to: before the free-viewpoint video is generated based on the images acquired by the one primary camera and the N secondary cameras at the second moment, obtain the images acquired by the one primary camera and the N secondary cameras at the second moment.

Referring to FIG. 25, FIG. 25 illustrates a structure of a subject selection apparatus according to an embodiment of this application. As shown in FIG. 25, the apparatus 2500 includes a display module 2501, a receiving module 2502, and a sending module 2503.

The display module 2501 is configured to display a target interface including a rotation axis selection control, where the rotation axis selection control is configured to instruct to select a rotation axis.

For a specific description of the display module 2501, reference may be made to the description of step 2001, and details are not repeated herein.

The receiving module 2502 is configured to receive a selection operation for a target rotation axis.

For a specific description of the receiving module 2502, reference may be made to the description of step 2002, and details are not repeated herein.

The sending module 2503 is configured to send a selection indication for the target rotation axis to a server, where the target rotation axis is configured to instruct to generate a free-viewpoint video with the target rotation axis as a rotation center of a viewing angle.

For a specific description of the sending module 2503, reference may be made to the description of step 2003, and details are not repeated herein.

In a possible implementation, the rotation axis selection control is configured to instruct to select the rotation axis from a location point in a target region.

In a possible implementation, the rotation axis selection control is configured to instruct to select the rotation axis from a plurality of subjects in a target region; the target rotation axis is used to indicate a target subject, and the target subject is further used to indicate to determine a primary camera, where a region in which the target subject is located in the free-viewpoint video is related to a region in which the target subject is in an image acquired by the primary camera.

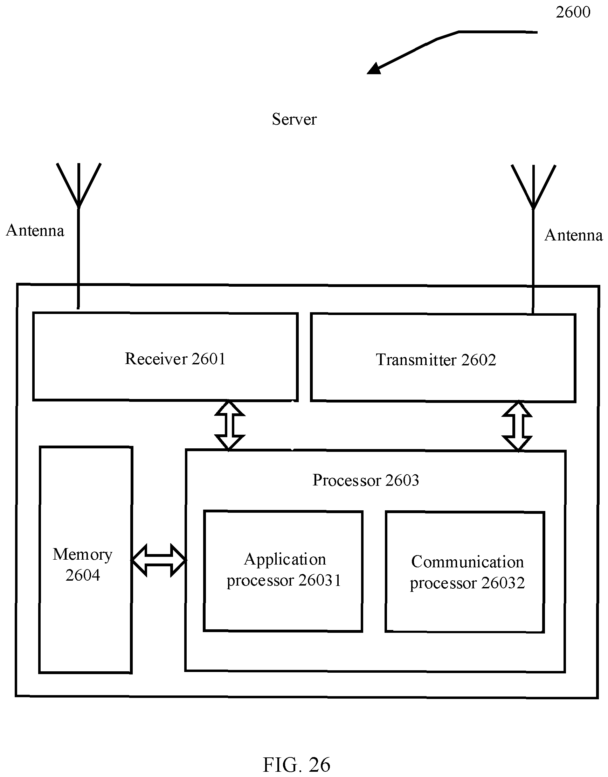

Next, a server provided in an embodiment of this application is described. Referring to FIG. 26, FIG. 26 is a schematic diagram of a structure of a server according to an embodiment of this application. Specifically, the server 2600 may include a receiver 2601, a transmitter 2602, a processor 2603, and a memory 2604 (there may be one or more processors 2603 in the server 2600, and for example, there is one processor in FIG. 11), where the processor 2603 may include an application processor 26031 and a communication processor 26032. In some embodiments of this application, the receiver 2601, the transmitter 2602, the processor 2603, and the memory 2604 may be connected through a bus or in another manner.

The memory 2604 may include a read-only memory and a random access memory, and provide instructions and data to the processor 2603. A part of the memory 2604 may further include a non-volatile random access memory (non-volatile random access memory, NVRAM). The memory 2604 stores operation instructions of the processor, executable modules, or data structures, or subsets thereof, or extended sets thereof, where the operation instructions may include various operation instructions for implementing various operations.

The processor 2603 controls the operations of the server. In actual applications, various components of the server are coupled together via a bus system, where the bus system may further include a power bus, a control bus, a status signal bus, and the like in addition to a data bus. However, for clarity, various types of buses are all referred to as the bus system in the figure.

The methods disclosed in the foregoing embodiments of this application may be applied to the processor 2603, or implemented by the processor 2603. The processor 2603 may be an integrated circuit chip having a signal processing capability. In an implementation process, the steps of the foregoing methods may be completed by a hardware integrated logic circuit or instructions in the form of software in the processor 2603. The processor 2603 described above may be a general-purpose processor, a digital signal processor (digital signal processing, DSP), a microprocessor or microcontroller, and a vision processing unit (vision processing unit, VPU), a tensor processing unit (tensor processing unit, TPU), and another processor suitable for AI computing, and may further include an application-specific integrated circuit (application specific integrated circuit, ASIC), a field-programmable gate array (field-programmable gate array, FPGA) or another programmable logic device, a discrete gate or transistor logic device, or a discrete hardware component. The processor 2603 can implement or execute various methods, steps, and logical block diagrams disclosed in the embodiments of this application. The general-purpose processor may be a microprocessor, or the processor may be any conventional processor or the like. The steps of the method disclosed with reference to the embodiments of this application may be directly executed and accomplished using a hardware decoding processor, or may be executed and accomplished using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 2604, and the processor 2603 reads information in the memory 2604 and completes the steps of the image processing method in the foregoing embodiment corresponding to FIG. 3 in combination with hardware of the processor 2603.

The receiver 2601 may be configured to receive input digit or character information and generate signal input related to related settings and function control of the server. Specifically, the receiver 2601 may receive images acquired by a plurality of cameras.

The transmitter 2602 may be configured to output digital or character information through a first interface. The transmitter 2602 may be further configured to send instructions to a disk group through the first interface, to modify data in the disk group. Specifically, the transmitter 2602 may send a generated free-viewpoint video to a terminal device.

An embodiment of this application further provides a computer program product that, when run on a computer, causes the computer to perform the steps of the image processing method.

An embodiment of this application further provides a computer-readable storage medium. The computer-readable storage medium stores a program for signal processing that, when run on a computer, causes the computer to perform the steps of the image processing method in the methods described in the foregoing embodiments.

An image display apparatus provided in an embodiment of this application may be specifically a chip. The chip includes a processing unit and a communication unit. The processing unit may be, for example, a processor. The communication unit may be, for example, an input/output interface, a pin, a circuit, or the like. The processing unit can execute computer-executable instructions stored in a storage unit, so that a chip in a server performs the data processing method described in the foregoing embodiments, or a chip in a training device performs the data processing method described in the foregoing embodiments. Optionally, the storage unit is a storage unit in the chip, such as a register or a cache. Alternatively, the storage unit may be a storage unit located outside the chip on the wireless access device end, such as a read-only memory (read-only memory, ROM) or another type of static storage device that can store static information and instructions, or a random access memory (random access memory, RAM).

It should be additionally noted that the apparatus embodiments described above are merely examples, where the units described as separate parts may or may not be physically separate, and parts displayed as units may or may not be physical units, may be located in one position, or may be distributed on a plurality of network units. The objective of the solutions of the embodiments may be achieved by selecting some or all of the modules therein according to actual needs. In addition, in the accompanying drawings of the apparatus embodiments provided in this application, the connection relationship between the modules indicates that they have a communicative connection, which may be specifically implemented as one or more communication buses or signal lines.

Through the foregoing description of the implementations, persons skilled in the art can clearly understand that this application may be implemented by software plus necessary general-purpose hardware, and certainly may also be implemented by dedicated hardware including an application-specific integrated circuit, a dedicated CPU, a dedicated memory, a dedicated component, and the like. Generally, all functions completed by computer programs can be easily implemented by corresponding hardware, and a specific hardware structure for implementing the same function may also vary, such as an analog circuit, a digital circuit, or a dedicated circuit. However, for this application, software program implementation is a better implementation in most cases. Based on such an understanding, the technical solutions of this application essentially or the part contributing to the conventional technology may be implemented in the form of a software product. The computer software product is stored in a readable storage medium, such as a floppy disk, a USB flash drive, a removable hard disk, a ROM, a RAM, a magnetic disk, or an optical disc of a computer, and includes several instructions that cause a computer device (which may be a personal computer, a server, a network device, or the like) to perform the methods described in the embodiments of this application.

All or some of the foregoing embodiments may be implemented by using software, hardware, firmware, or any combination thereof. When software is used to implement embodiments, the foregoing embodiments may be implemented completely or partially in a form of a computer program product.

The computer program product includes one or more computer instructions. When the computer program instructions are loaded and executed on the computer, the procedures or functions according to the embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium storable by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Drive, SSD)), or the like.

**Claims**

1. An image processing method, comprising:

   determining a target subject;
   obtaining M images, wherein the M images are images respectively acquired by M cameras for the target subject at a first moment, the M cameras are arranged around a target region, lenses of the M cameras are directed to the target region, and the target subject is within the target region; and determining a region in which the target subject is located in each of the M images;
   determining one primary camera from the M cameras based on the region in which the target subject is located in each image, wherein a location of the primary camera is related to a location of the target subject in the target region;
   determining N secondary cameras from the M cameras based on the primary camera; and
   generating a free-viewpoint video based on images acquired by the one primary camera and the N secondary cameras at a second moment, wherein a region in which the target subject is located in the free-viewpoint video is related to a region in which the target subject is in the image acquired by the primary camera at the second moment.

2. The method according to claim 1, wherein the determining one primary camera from the M cameras based on the region in which the target subject is located in each image comprises:
   determining a target image that satisfies a first preset condition from the M images based on the region in which the target subject is located in each image, and using a camera that acquires the target image as the primary camera, wherein the first preset condition comprises at least one of the following:

   an image in the M images and with the region in which the target subject is located being closest to a central axis of the image; or
   an image in the M images and with the region in which the target subject is located accounting for a largest proportion of pixels in the image; or
   an image in the M images and with the region in which the target subject is located having a largest pixel length in an image longitudinal axis direction of the image.

3. The method according to claim 2, wherein the using a camera that acquires the target image as the primary camera comprises:
   obtaining a target camera position number corresponding to the camera that acquires the target image, and using the camera corresponding to the target camera position number as the primary camera.

4. The method according to any one of claims 1 to 3, wherein a distance between the primary camera and the target subject is less than a preset distance; or

the target subject is located at a center position of a region covered by a field-of-view angle of a lens of the primary camera; or
the target subject is completely imaged in the image acquired by the primary camera.

5. The method according to any one of claims 1 to 4, wherein the determining N secondary cameras from the M cameras based on the primary camera comprises:
using N1 cameras in the clockwise direction from the primary camera and N2 cameras in the counterclockwise direction from the primary camera in the M cameras as secondary cameras, wherein the sum of N1 and N2 is N.

6. The method according to claim 5, wherein the one primary camera and the N secondary cameras are cameras with consecutive camera numbers; or

a distance between the region in which the target subject is located in images acquired by the N secondary cameras and the central axis of the image is less than a preset value; or
the target subject is completely imaged in the images acquired by the N secondary cameras, or
N1 is a first preset value, and N2 is a second preset value; or
N1 = N2.

7. The method according to any one of claims 1 to 6, wherein the generating a free-viewpoint video based on images acquired by the one primary camera and the N secondary cameras at a second moment comprises:

obtaining camera position numbers of the one primary camera and the N secondary cameras; and
performing, based on an order of the camera position numbers of the one primary camera and the N secondary cameras, time domain arrangement and subject alignment on N+1 images acquired by the one primary camera and the N secondary cameras at the second moment, to generate the free-viewpoint video.

8. The method according to claim 7, wherein the performing subject alignment on N+1 images acquired by the one primary camera and the N secondary cameras at the second moment comprises at least one of the following:

scaling the N images acquired by the N secondary cameras at the second moment, by using a region in which the target subject is located in the image acquired by the one primary camera at the second moment as a reference; or
rotating the N images acquired by the N secondary cameras at the second moment, by using a region in which the target subject is located in the image acquired by the one primary camera at the second moment as a reference; or
cropping each of the images acquired by the one primary camera and the N secondary cameras at the second moment, based on the region in which the target subject is located in each of the images acquired by the one primary camera and the N secondary cameras at the second moment.

9. The method according to any one of claims 1 to 8, wherein the determining a target subject comprises:

identifying at least one subject in the target region;
sending information about each of the at least one subject to a terminal device; and
determining the target subject by receiving a selection indication sent by the terminal device for the target subject in the at least one subject.

10. The method according to any one of claims 1 to 8, wherein the determining a target subject comprises:
determining the target subject by identifying that the subject in the target region comprises only the target subject.

11. The method according to any one of claims 1 to 10, wherein the target region comprises a first target point and a second target point, and before the obtaining M images, the method further comprises:

obtaining a location of the target subject in the target region; and
controlling, based on a distance between the location of the target subject and the first target point being less than that from the second target point, the lenses of the M cameras to change from being directed to the second target point to being directed to the first target point; and
the obtaining M images comprises:
obtaining the M images acquired by the M cameras when the lenses are directed to the first target point.

12. The method according to any one of claims 1 to 11, wherein the determining a region in which the target subject is located in each of the M images comprises:

obtaining a first location of the target subject in a physical space and intrinsic and extrinsic parameters of the M cameras; and

determining the region in which the target subject is located in each of the M images based on the first location and the intrinsic and extrinsic parameters of the M cameras.

13. The method according to any one of claims 1 to 12, wherein the first moment is the same as the second moment; or the first moment is different from the second moment; and before the generating a free-viewpoint video based on images acquired by the one primary camera and the N secondary cameras at a second moment, the method further comprises:

obtaining the images acquired by the one primary camera and the N secondary cameras at the second moment.

14. A subject selection method, applied to a terminal device, the method comprising:

displaying a target interface comprising a rotation axis selection control, wherein the rotation axis selection control is configured to instruct to select a rotation axis;

receiving a selection operation for a target rotation axis; and

sending a selection indication for the target rotation axis to a server, wherein the target rotation axis is configured to instruct to generate a free-viewpoint video with the target rotation axis as a rotation center of a viewing angle.

15. The method according to claim 14, wherein the rotation axis selection control is configured to instruct to select the rotation axis from a location point in a target region.

16. The method according to claim 14, wherein the rotation axis selection control is configured to instruct to select the rotation axis from a plurality of subjects in a target region; the target rotation axis is used to indicate a target subject, and the target subject is further used to indicate to determine a primary camera, wherein a region in which the target subject is located in the free-viewpoint video is related to a region in which the target subject is in an image acquired by the primary camera.

17. An image processing apparatus, comprising:

a determining module, configured to determine a target subject;

an obtaining module, configured to obtain M images, wherein the M images are images respectively acquired by M cameras for the target subject at a first moment, the M cameras are arranged around a target region, lenses of the M cameras are directed to the target region, and the target subject is within the target region; and determine a region in which the target subject is located in each of the M images;

a camera determining module, configured to determine one primary camera from the M cameras based on the region in which the target subject is located in each image, wherein a location of the primary camera is related to a location of the target subject in the target region; and determine N secondary cameras from the M cameras based on the primary camera; and

a video generation module, configured to generate a free-viewpoint video based on images acquired by the one primary camera and the N secondary cameras at a second moment, wherein a region in which the target subject is located in the free-viewpoint video is related to a region in which the target subject is in the image acquired by the primary camera at the second moment.

18. The apparatus according to claim 17, wherein the camera determining module is specifically configured to determine a target image that satisfies a first preset condition from the M images based on the region in which the target subject is located in each image, and use a camera that acquires the target image as the primary camera, wherein the first preset condition comprises at least one of the following:

an image in the M images and with the region in which the target subject is located being closest to a central axis of the image; or

an image in the M images and with the region in which the target subject is located accounting for a largest proportion of pixels in the image; or

an image in the M images and with the region in which the target subject is located having a largest pixel length in an image longitudinal axis direction of the image.

**19.** The apparatus according to claim 18, wherein the camera determining module is specifically configured to obtain a target camera position number corresponding to the camera that acquires the target image, and use the camera corresponding to the target camera position number as the primary camera.

**20.** The apparatus according to any one of claims 17 to 19, wherein a distance between the primary camera and the target subject is less than a preset distance; or

the target subject is located at a center position of a region covered by a field-of-view angle of a lens of the primary camera; or
the target subject is completely imaged in the image acquired by the primary camera.

**21.** The apparatus according to any one of claims 17 to 20, wherein the camera determining module is specifically configured to use N1 cameras in the clockwise direction from the primary camera and N2 cameras in the counterclockwise direction from the primary camera in the M cameras as secondary cameras, wherein the sum of N1 and N2 is N.

**22.** The apparatus according to claim 21, wherein the one primary camera and the N secondary cameras are cameras with consecutive camera numbers; or

a distance between the region in which the target subject is located in images acquired by the N secondary cameras and the central axis of the image is less than a preset value; or
the target subject is completely imaged in the images acquired by the N secondary cameras, or
N1 is a first preset value, and N2 is a second preset value; or
N1 = N2.

**23.** The apparatus according to any one of claims 17 to 22, wherein the video generation module is specifically configured to obtain camera position numbers of the one primary camera and the N secondary cameras; and
perform, based on an order of the camera position numbers of the one primary camera and the N secondary cameras, time domain arrangement and subject alignment on N+1 images acquired by the one primary camera and the N secondary cameras at the second moment, to generate the free-viewpoint video.

**24.** The apparatus according to claim 23, wherein the performing subject alignment on N+1 images acquired by the one primary camera and the N secondary cameras at the second moment comprises at least one of the following:

scaling the N images acquired by the N secondary cameras at the second moment, by using a region in which the target subject is located in the image acquired by the one primary camera at the second moment as a reference; or
rotating the N images acquired by the N secondary cameras at the second moment, by using a region in which the target subject is located in the image acquired by the one primary camera at the second moment as a reference; or
cropping each of the images acquired by the one primary camera and the N secondary cameras at the second moment, based on the region in which the target subject is located in each of the images acquired by the one primary camera and the N secondary cameras at the second moment.

**25.** The apparatus according to any one of claims 17 to 24, wherein the determining module is configured to identify at least one subject in the target region;

send information about each of the at least one subject to a terminal device; and
determine the target subject by receiving a selection indication sent by the terminal device for the target subject in the at least one subject.

**26.** The apparatus according to any one of claims 17 to 24, wherein the determining module is configured to determine the target subject by identifying that the subject in the target region comprises only the target subject.

**27.** The apparatus according to any one of claims 17 to 26, wherein the target region comprises a first target point and a second target point, and the obtaining module is further configured to obtain a location of the target subject in the target region;

control, based on a distance between the location of the target subject and the first target point being less than that from the second target point, the lenses of the M cameras to change from being directed to the second target point to being directed to the first target point; and

obtain the M images acquired by the M cameras when the lenses are directed to the first target point.

28. The apparatus according to any one of claims 17 to 27, wherein the obtaining module is configured to obtain a first location of the target subject in a physical space and intrinsic and extrinsic parameters of the M cameras; and determine the region in which the target subject is located in each of the M images based on the first location and the intrinsic and extrinsic parameters of the M cameras.

29. The apparatus according to any one of claims 17 to 28, wherein the first moment is the same as the second moment; or the first moment is different from the second moment; and the obtaining module is further configured to: before the free-viewpoint video is generated based on the images acquired by the one primary camera and the N secondary cameras at the second moment, obtain the images acquired by the one primary camera and the N secondary cameras at the second moment.

30. A subject selection apparatus, applied to a terminal device, the apparatus comprising:

a display module, configured to display a target interface comprising a rotation axis selection control, wherein the rotation axis selection control is configured to instruct to select a rotation axis;

a receiving module, configured to receive a selection operation for a target rotation axis; and

a sending module, configured to send a selection indication for the target rotation axis to a server, wherein the target rotation axis is configured to instruct to generate a free-viewpoint video with the target rotation axis as a rotation center of a viewing angle.

31. The apparatus according to claim 30, wherein the rotation axis selection control is configured to instruct to select the rotation axis from a location point in a target region.

32. The apparatus according to claim 30 or 31, wherein the rotation axis selection control is configured to instruct to select the rotation axis from a plurality of subjects in a target region; the target rotation axis is used to indicate a target subject, and the target subject is further used to indicate to determine a primary camera, wherein a region in which the target subject is located in the free-viewpoint video is related to a region in which the target subject is in an image acquired by the primary camera.

33. A server, comprising a processor, a memory, and a bus, wherein

the processor and the memory are connected through the bus;

the memory is configured to store a computer program; and

the processor is configured to control the memory and execute the program stored on the memory to implement the steps of the method according to any one of claims 1 to 13.

34. A terminal device, comprising a processor, a memory, a display, and a bus, wherein

the processor, the display, and the memory are connected through the bus;

the memory is configured to store a computer program; and

the processor is configured to control the memory and execute the program stored on the memory, and further configured to control the display to implement the steps of the method according to any one of claims 14 to 16.

35. A computer-readable storage medium, comprising a program that, when run on a computer, causes the computer to perform the method according to any one of claims 1 to 16.

36. A computer program product comprising instructions, wherein the computer program product, when run on a terminal, causes the terminal to perform the method according to any one of claims 1 to 16.

FIG. 1a

FIG. 1b

FIG. 1c

FIG. 1d

Server 1300

Memory — 1330

Processor — 1310

Transceiver — 1320

FIG. 1e

Terminal 100

Antenna 1

Antenna 2

| Mobile communication module<br>2G/3G/4G/5G<br>[150] | Wireless communication module<br>BT/WLAN/GNSS/NFC/IR/FM<br>[160] |

Speaker
[170A]

Receiver
[170B]

Microphone
[170C]

Earphone
interface
[170D]

Audio
module
[170]

Displays 1–N [194]

Cameras 1–N [193]

Indicator [192]

Motor [191]

Button [190]

Internal memory [121]

SIM card interfaces
1–N [195]

External memory
interface [120]

Processor

[110]

Sensor module
[180]

Pressure sensor
[180A]

Gyroscope sensor
[180B]

Barometric
pressure sensor
[180C]

Magnetic sensor
[180D]

Acceleration
sensor [180E]

Distance sensor
[180F]

Optical proximity
sensor [180G]

Fingerprint sensor
[180H]

Temperature
sensor [180J]

Touch sensor
[180K]

Ambient light
sensor [180L]

Bone conduction
sensor [180M]

USB interface [130]

Charging
input

Charging
management
module
[140]

Power
management
module
[141]

Battery
[142]

FIG. 2a

| Application layer | Camera | Calendar | Maps | WLAN | Music | Short messages |
| | Gallery | Call | Navigation | Bluetooth | Videos | ... |

| Application framework layer | Window manager | Content providers | Telephony manager | Resource manager |
| | Notification manager | View system | ... | |

| System libraries | Surface manager | Three-dimensional graphics processing libraries | Android runtime |
| | Two-dimensional graphics engine | Media Libraries | ... | |

| Kernel layer | Display driver | Camera driver | |
| | Audio drivers | Sensor driver | ... |

FIG. 2b

Determine a target subject — 301

Obtain M images, where the M images are images respectively acquired by M cameras for the target subject at a first moment, the M cameras are arranged around a target region, lenses of the M cameras are directed to the target region, and the target subject is within the target region; and determine a region in which the target subject is located in each of the M images — 302

Determine one primary camera from the M cameras based on the region in which the target subject is located in each image, where a location of the primary camera is related to a location of the target subject in the target region — 303

Determine N secondary cameras from the M cameras based on the primary camera — 304

Generate a free-viewpoint video based on images acquired by the one primary camera and the N secondary cameras at a second moment, where a region in which the target subject is located in the free-viewpoint video is related to a region in which the target subject is in the image acquired by the primary camera at the second moment — 305

FIG. 3

FIG. 4

Offline flow

FIG. 5

FIG. 6

FIG. 7a

★ Indicates each target point

● Indicates the location of the target subject

FIG. 7b

FIG. 7c

V1

A1

B1

V2

A2
B2

A1
A2
B1 B2

**Rotate**

A1

A2
B1 B2

**Scale**

V2'

A1
A2
B2
B1

**Translate**

V2'

A1
A2
B2
B1

V1

**Crop**

FIG. 8

FIG. 9

FIG. 10

FIG. 11

FIG. 12

FIG. 13

FIG. 14

Online flow

FIG. 15

FIG. 16

FIG. 17

Online flow

FIG. 18

FIG. 19

Display a target interface including a rotation axis selection region, where the rotation axis selection region includes at least one option, and each of the at least one option is used to indicate one rotation axis — 2001

Receive a selection for a target option in the at least one option, where the target option is used to indicate a target rotation axis — 2002

Send a selection indication for the target rotation axis to a server, where the target rotation axis is configured to instruct to generate a free-viewpoint video with the target rotation axis as a rotation center of a viewing angle — 2003

FIG. 20a

C1
C2
C3
C4
C5

C1
C2
C3
C4
C5

FIG. 20b

FIG. 21

FIG. 22

FIG. 23

2400

2402

Obtaining module

2403

Camera determining module

2401

Determining module

2404

Video generation module

FIG. 24

2500

2502

Receiving module

2501

Display module

2503

Sending module

FIG. 25

2600

Server

FIG. 26

## INTERNATIONAL SEARCH REPORT

| International application No. |
| --- |
| **PCT/CN2022/083024** |

| A. | CLASSIFICATION OF SUBJECT MATTER |
| --- | --- |

G06T 7/00(2017.01)i

According to International Patent Classification (IPC) or to both national classification and IPC

| B. | FIELDS SEARCHED |
| --- | --- |

Minimum documentation searched (classification system followed by classification symbols)

G06T; H04N

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, IEEE, BAIDU: 自由视点, 切换, 主相机, 主像机, 位置, 面积, 区域, 视频, 拼接, 合成, free viewpoint, switch, change, main camera, main video, position, area, region, video, joint, composite, synthesis

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111866525 A (TENCENT TECHNOLOGY SHENZHEN CO., LTD.) 30 October 2020 (2020-10-30) <br> description, paragraphs 29-30 | 14-15, 30-31, 34-36 |
| Y | US 2009290848 A1 (BROWN, M. J.) 26 November 2009 (2009-11-26) <br> description, paragraphs 110-116 | 1-13, 17-29, 33 |
| Y | CN 109522846 A (SHENZHEN BOWEI EDUCATION TECHNOLOGY CO., LTD.) 26 March 2019 (2019-03-26) <br> description, paragraphs [0096]-[0097] | 1-13, 16-29, 32-33 |
| Y | CN 111866525 A (TENCENT TECHNOLOGY SHENZHEN CO., LTD.) 30 October 2020 (2020-10-30) <br> description, paragraphs 29 and 30 | 16, 32 |
| A | CN 110049345 A (BEIJING HIPPO ENERGY SPORTS TECHNOLOGY CO., LTD.) 23 July 2019 (2019-07-23) <br> entire document | 1-36 |
| A | US 2019174122 A1 (CANON K. K.) 06 June 2019 (2019-06-06) <br> entire document | 1-36 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 May 2022** | **31 May 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/083024**

| Patent document cited in search report | | | Publication date (day/month/year) | Patent family member(s) | | | Publication date (day/month/year) |
|---|---|---|---|---|---|---|---|
| CN | 111866525 | A | 30 October 2020 | None | | | |
| US | 2009290848 | A1 | 26 November 2009 | CA | 2675359 | A1 | 17 July 2008 |
| | | | | WO | 2008083500 | A1 | 17 July 2008 |
| CN | 109522846 | A | 26 March 2019 | CN | 109522846 | B | 14 August 2020 |
| CN | 110049345 | A | 23 July 2019 | None | | | |
| US | 2019174122 | A1 | 06 June 2019 | US | 10951879 | B2 | 16 March 2021 |

Form PCT/ISA/210 (patent family annex) (January 2015)

**EP 4 293 619 A1**

**Patent documents cited in the description**

- CN 202110350834